# EUROPÄISCHE PATENTSCHRIFT

(11) **EP 2 297 230 B1**
(45) Veröffentlichungstag und Bekanntmachung des Hinweises auf die Patenterteilung: **05.11.2014**
(21) Anmeldenummer: 09776977.2
(22) Anmeldetag: 06.07.2009
(51) Int. Cl.: C08G 77/38, C08G 77/46

(54) **POLYHYDROXYFUNKTIONELLE POLYSILOXANE ZUR ERHÖHUNG DER OBERFLÄCHENENERGIE VON THERMOPLASTEN, VERFAHREN ZU IHRER HERSTELLUNG UND IHRE VERWENDUNG**
POLYHYDROXYFUNCTIONAL POLYSILOXANES FOR INCREASING THE SURFACE ENERGY OF THERMOPLASTICS METHOD FOR PRODUCTION AND USE THEREOF
POLYSILOXANES À FONCTION POLYHYDROXY DESTINÉS À AUGMENTER L'ÉNERGIE SUPERFICIELLE DE THERMOPLASTIQUES, PROCÉDÉS DE FABRICATION DE CES COMPOSÉS ET LEUR UTILISATION

(30) Priorität: 08.07.2008 DE 102008032064
(43) Veröffentlichungstag der Anmeldung: 23.03.2011
(73) Patentinhaber: BYK-Chemie GmbH, 46483 Wesel (DE)
(72) Erfinder: JAUNKY, Wojciech, 46485 Wesel (DE); GERTZEN, Bärbel, 46446 Emmerich (DE); FRANK, Albert, 46509 Xanten (DE); BÖGERSHAUSEN, Hans-Willi, 47918 Tönisvorst (DE); BUBAT, Alfred, 46487 Wesel (DE); OMEIS, Jürgen, 46286 Dorsten-Lembeck (DE)
(74) Vertreter: Leifert & Steffan
(86) Internationale Anmeldenummer: PCT/EP2009/004867
(87) Internationale Veröffentlichungsnummer: WO 2010/003611

(56) Entgegenhaltungen:
- EP-A- 1 489 128
- DE-A1-102006 031 152
- US-A1- 2006 034 875

## Beschreibung

Die vorliegende Erfindung betrifft die Verwendung polyhydroxyfunktioneller Polysiloxane, die sich durch die Addition polyhydroxyfunktioneller Allylpolyether an Alkyl-Wasserstoff-Siloxane herstellen lassen, als Additive zur Erhöhung der Oberflächenenergie und zur Verbesserung der Bedruckbarkeit von Thermoplasten und polymeren Formmassen. Die Erfindung betrifft weiterhin ein Verfahren zur Erhöhung der Oberflächenenergie von Thermoplasten und polymeren Formmassen, sowie Thermoplasten und polymere Formmassen enthaltend die polyhydroxyfunktionellen Polysiloxane.

Aus Gründen des Umweltschutzes (z.B. zur Reduzierung der Emission von flüchtigen organischen Verbindungen) ist es höchst wünschenswert, lösemittelhaltige auf wasser-basierte Lacksysteme umzustellen. Die meisten thermoplastischen Kunststoffe haben eine unpolare, elektrisch gut isolierende und wasserabweisende Oberfläche mit niedriger Oberflächenenergie. Deshalb ist Benetzung derartiger Oberflächen durch z. B. Druckfarben, wässrige Kunststoffdispersionen, Klebstoffe oder Haftvermittler eine Herausforderung. Um die Benetzung von Druckfarben oder Lackformulierungen auf thermoplastischen Substraten zu verbessern, muß die Oberfläche durch Modifikation polarer gemacht werden. Aus diesem Grund gibt es einen Bedarf zur Entwicklung entsprechender Methoden zur Verbesserung der Bedruckbarkeit/Lackierbarkeit diverser thermoplastischer Materialien und polymerer Formmassen.

Die gegenwärtige Praxis in der Industrie zur Erhöhung der Polarität derartiger Oberflächen ist die Oxidierung der Oberflächen durch z. B. Flammbehandlung oder Corona-Behandlung. Diese Vorhandlung führt dann idealerweise zu einer verbesserten Haftung.

Darüber hinaus ist die Effektivität und die Dauerhaftigkeit derartiger Verfahren nicht zufriedenstellend. Weiterhin können geformte thermoplastische Artikel mit komplexer 3-D-Geometrie nicht effizient behandelt werden.

Der Effekt der Polarisierung derartiger Oberflächen, die eine Erhöhung der Affinität gegenüber wasserbasierten Formulierungen bewirkt, ist nicht permanent. Nach einer gewissen Lagerzeit der behandelten Oberflächen ist die Oberflächenenergie wieder reduziert. In diesen Fällen muß die Oberfläche vor einer Beschichtung einer erneuten Behandlung unterzogen werden.

Es ist deshalb ein Ziel der vorliegenden Erfindung, ein Additiv bereitzustellen, das die Oberflächenenergie von thermoplastischen Materialien erhöht. Es ist ein weiteres Ziel der vorliegenden Erfindung, eine Methode zur Erhöhung der Oberflächenenergie von thermoplastischen Materialien bereitzustellen. Es ist ein weiteres Ziel der vorliegenden Erfindung, eine Formulierung zur Erhöhung der Oberflächenenergie von thermoplastischen Materialien bereitzustellen, die sofort oder nach Lagerung bedruckt oder beschichtet werden können und die vor dem endgültigen Beschichtungsschritt nicht weiter vorbehandelt werden müssen.

Überraschenderweise wurde gefunden, dass aus der Zugabe von polyhydroxyfunktionellen polyethermodifizierten Polysiloxanen zu Thermoplasten oder polymeren Formmassen Materialien mit erhöhter Oberflächenenergie resultieren.

Die Methode beinhaltet das Mischen geringer Mengen polyhydroxyfunktioneller polyethermodifizierten Polysiloxanen mit sehr unterschiedlichen niedrig-, mittel- und hochdichten thermoplastischen Materialien unterschiedlicher Polaritäten oder solcher polymerer Formmassen zur Modifizierung der Oberflächenenergie. Die so erhaltenen thermoplastischen Substrate und polymeren Formmassen können mit wäßrigen Druckfarben oder Farben und Lacken beschichtet werden. Die erhaltenen Beschichtungen verfügen über eine verbesserte Adhäsion.

Polyhydroxyfunktionelle polyether-modifizierte Polysiloxane sind im Prinzip aus zahlreichen Patentschriften bekannt.

US 4,431,789 beschreibt die Herstellung von Organosiloxanen mit alkoholischen Hydroxygruppen. Die Verbindungen werden hergestellt durch die Hydrosilylierung von Methyl-Wasserstoff-Siloxanen und Polyglycerinen, die eine terminale Allylgruppe aufweisen. Die so erhaltenen Verbindungen können als nichtionische oberflächenaktive Polysiloxane eingesetzt werden.

In der JP 10316540 werden Umsetzungsprodukte aus Methyl-Wasserstoff Siloxanen und Allyl-Polyglycerinen, die denen in der US 4,431,789 sehr ähnlich sind, als Haarkonditionierungsmittel beschrieben.

US 2006/0034875 beschreibt die Synthese von Polyglycerol-modifizierten Polysiloxanen zur Verwendung als Emulgatoren. Diese Emulgatoren sind dazu geeignet, Öle durch Einlagerung unter Quellung in kosmetischen Zubereitungen zu speichern.

EP 1 489 128 beschreibt die Synthese von Polysiloxanen, die mit Polyglycerin modifiziert sind, und ihre Anwendung in Geweben und kosmetischen Formulierungen. Beanspruchte Vorteile sind eine verbesserte Benetzung und Adsorption auf verschiedenen Substraten, eine geringere Vergilbung und Hautreizung.

US 2005/0261133 offenbart die Herstellung und Verwendung von glycerin-modifizierten Polysiloxanen als Spreitungsmittel für chemische Pflanzenschutzformulierungen. Die offenbarten Produkte reduzieren die Oberflächenspannung von Pflanzenschutzmitteln, um die Spreitung von Pestiziden und Insektiziden auf Blattoberflächen zu verbessern.

WO 2007/075927 beschreibt verzweigte Polyether-modifizierte Polysiloxane als Zusatzmittel für Beschichtungen, die die Hydrophilie und die Verschmutzungsneigung von Beschichtungen verbessern. Die verzweigten Polyether basieren auf Oxetanen, Glycidol und/oder Alkylenoxiden.

Aus der DE 10 2006 031 152 sind verzweigte polyhydroxyfunktionelle Polysiloxane bekannt, die sich durch Addition Hydroxyoxetan-basierter polyhydroxyfunktioneller Allylpolyether an Alkyl-Wasserstoff-Siloxane herstellen lassen. Die offenbarten Produkte werden beschrieben zur Erhöhung der hydrophoben und oleophoben Eigenschaften von Beschichtungsoberflächen, sowie und zur Verbesserung von Trenneigenschaften in polymeren Formmassen.

WO 2008/003470 beschreibt die Verwendung von polyhydroxyfunktionellen Polysiloxanen in Thermoplasten zur Verbesserung der schmutzabweisenden und anti-adhäsiven Eigenschaften des Thermoplasten. Die Polysiloxane werden über Additionsreaktionen von Hydroxyoxetan-Derivaten erhalten. WO 2008/003470 gibt keinen Hinweis darauf, dass bestimmte Polysiloxane auch zur Verbesserung der Bedruckbarkeit verwendet werden können. Im Gegenteil, die in der WO 2008/003470 erhaltenen Thermoplasten sind besonders schmutzabweisend und anti-adhäsiv.

Die Verwendung von Additiven zur Hydrophilierung von Polyolefinoberflächen, wie z.B. Polypropylen ist bereits beschrieben, siehe "Zhu, S. and Hirt, D. E., Hydrophilization of Polypropylene Films Using Migratory Additives, Journal of Vinyl and Additive Technology, (2007), 13(2), 57-64". Die hier beschriebenen oberflächenmodifizierenden Additive beinhalten lineare Polyethylenglykole und verzweigte hydroxy-endständige Vierarm-Polyethylenglykole. Es gab keine signifikante Verbesserung der Oberflächenhydrophilie mit den linearen Polyethylenglykolen und den verzweigten hydroxy-endständigen Vierarm-Polyethylenglykolen. Die Studie ergab aber, dass das kommerzielle Produkt IRGASURF HL 560 (CIBA SPECIALITY CHEMICAL) die Oberflächenbenetzbarkeit in relativ kurzer Zeit ändert.

In der Patentliteratur werden zur Erhöhung der Oberflächenenergie von Polyolefinen außerdem Fettalkohole und Fettsäure-Derivate von Polyethylenglykolen beschrieben (z.B. US 5,464,691; US 5,240,985; US 5,271,991; US 5,272,196; US 5,281,438; US 5,328,951; US 5,001,015).

Obwohl auch andere Additive beschrieben wurden, die die Oberflächenenergie von Thermoplasten erhöhen, gibt es einen Bedarf nach Substanzen, die in geringer Menge wirken, die in einer Vielzahl von Thermoplasten und polymerer Formmassen anwendbar sind, insbesondere bei Thermoplasten mit einem höheren Anteil kristalliner Zonen, und die keinen negativen Effekt auf die Verarbeitungsfähigkeit und mechanischen oder optischen Eigenschaften der Additiv-Thermoplast-Mischungen haben.

Die Aufgabe der vorliegenden Erfindung betrifft die Erhöhung der Oberflächenenergie von Thermoplasten.

Insbesondere bestand die Aufgabe darin, Thermoplasten bereitzustellen, die eine verbesserte Bedruckbarkeit, Lackierbarkeit und Haftung von wasserbasierten Formulierungen zeigen. Weiterhin sollen die zur Vermittlung dieser verbesserten Eigenschaften zugesetzten Additive die anderen Eigenschaften der Thermoplasten möglichst nicht beeinträchtigen. Die zugesetzten Additive sollen außerdem in relativ geringen Mengen ihre Wirksamkeit entfalten können.

Überraschenderweise hat sich gezeigt, daß die oben beschriebenen Aufgaben durch die Verwendung eines polyether-modifizierten polyhydroxyfunktionellen Polysiloxans, herstellbar dadurch, dass
(i) zunächst mindestens eine, mindestens eine Wasserstoff-aktive Gruppe aufweisende (meth)allylische Startverbindung mit mindestens einem Reagenz, ausgewählt aus der Gruppe bestehend aus Glycidol, Glycerolcarbonat und Hydroxyoxetanen, so umgesetzt wird, dass unter Ringöffnung mindestens ein (Meth)Allylpolyether gebildet wird, der mindestens einen verzweigten Polyglycidolrest und/oder mindestens einen verzweigten Polyoxetanrest umfasst, und dann
(ii) der oder die erhaltenen (Meth)Allylpolyether in Gegenwart eines säurepuffernden Agens an ein Si-H-funktionelles Alkylpolysiloxan addiert werden, als Additiv in Thermoplasten oder polymeren Formmassen gelöst werden kann.

Thermoplasten und polymere Formmassen, denen diese Additionsprodukte zugesetzt werden, zeichnen sich durch hohe Oberflächenenergien und eine verbesserte Bedruckbarkeit im Vergleich zu Thermoplasten oder polymeren Formmassen, denen solche Additionsprodukte nicht zugesetzt wurden, aus. Die erfindungsgemäßen Additionsprodukte beeinträchtigen auch die anderen Eigenschaften der Thermoplasten nicht wesentlich. Dabei können diese polyhydroxyfunktionellen Polysiloxane den Thermoplasten in relativ geringen Mengen (Additivmengen) zugesetzt werden. Die physikalischen Eigenschaften der ursprünglichen Thermoplasten beispielsweise in Bezug auf die mechanischen und optischen Eigenschaften, der Witterungsbeständigkeit and Verarbeitbarkeit werden durch die geringen Konzentrationen des Additivs nicht beeinträchtigt. Darüber hinaus zeigen die Thermoplasten und polymeren Formmassen, die die erfindungsgemäßen Additionsprodukte enthalten, zusätzliche typische Eigenschaften, die aus der Erhöhung der Oberflächenenergie resultieren, wie. z.B. antistatische Eigenschaften.

Das erfindungsgemäße Verfahren zur Erhöhung der Oberflächenenergie von Thermoplasten und polymeren Formmassen umfaßt die Mischung von geringen Mengen polyhydroxyfunktioneller polyethermodifizierter Polysiloxane mit sehr unterschiedlichen polymeren Formmassen bzw. niedrig-, mittel- und hochdichten thermoplastischen Materialien mit unterschiedlichen Kristallinitäten und Polaritäten zur homogenen Modifizierung der Oberflächenenergie. Um die oben erwähnten Oberflächenmodifikationen zu erreichen, segregieren die im thermoplastischen Material bzw. polymeren Formmassen verteilten polyhydroxyfunktionellen polyethermodifizierten Polysiloxane zur Oberfläche des so gemischten thermoplastischen Materials, um diese zu hydrophilieren.

Das polyhydroxyfunktionelle Polysiloxan, das erfindungsgemäß zur Verbesserung der Bedruckbarkeit von Thermoplasten und polymeren Formmassen verwendet werden kann, ist herstellbar über die Addition mindestens eines verzweigten polyhydroxyfunktionellen Allylpolyethers an ein Si-H-funktionelles Polysiloxan. Der Ausdruck "verzweigter Polyether" steht hierbei für einen Polyether, in dem die Hauptkette und mindestens eine Seitenkette Polyetherbrücken enthält. Vorzugsweise weist dieser verzweigter Polyether eine hyperverzweigte Struktur auf. Die Verzweigungen können beispielsweise durch NMR-Analyse nachgewiesen werden.

Bei dem Si-H-funktionellen Polysiloxan kann es sich um ein Kettenpolymer, ein cyclisches Polymer, ein verzweigtes Polymer oder ein vernetztes Polymer handeln. Bevorzugt handelt es sich um ein Kettenpolymer oder ein verzweigtes Polymer. Besonders bevorzugt handelt es sich um ein Kettenpolymer. Bei den Si-H-funktionellen Alkyl-Polysiloxan handelt es sich vorzugsweise um ein Alkyl-Wasserstoff-Polysiloxan, das mit entsprechendem C₁-C₁₄-Alkylen, -Arylen oder - Aralkylen substituiert ist. Bevorzugt handelt es sich bei dem Alkyl-Wasserstoff-Polysiloxan um ein Methyl-Wasserstoff-Polysiloxan.

Bevorzugter Gegenstand der Erfindung ist die Verwendung polyhydroxyfunktioneller kettenförmiger Polysiloxane, die sich mit der folgenden allgemeinen Formel (I) darstellen lassen: 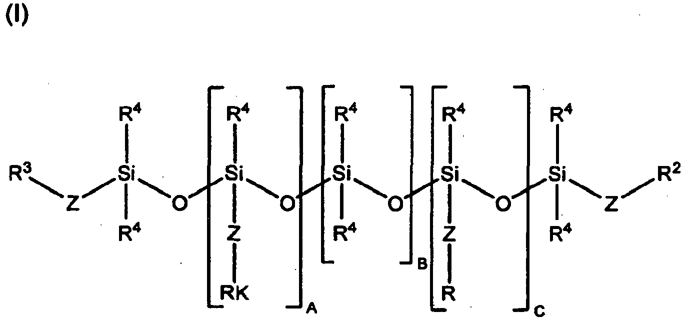 wobei
- Z: = unabhängig voneinander C₁-C₆-Alkylen, wobei an die Reste R oder RK gebundene Substituenten Z unabhängig voneinander für C₃-C₆-Alkylen, bevorzugt Propylen, stehen
- RK: = unverzweigter Polyetherrest aus Alkylenoxid-Einheiten und/oder Arylenoxid-Einheiten, und/oder aliphatischer Rest und/oder cycloaliphatischer Rest, und/oder unverzweigter und aliphatischer, cycloaliphatischer und/oder aromatischer Polyesterrest
- R: = polyhydroxyfunktioneller verzweigter Polyglycidol-Polyetherrest, der aus einer verzweigten Polyglycidolgruppe besteht oder diese enthält, und/oder = polyhydroxyfunktioneller verzweigter Polyoxetane-Polyetherrest, der aus einer verzweigten Polyoxetangruppe besteht oder diese enthält
- R² und R³: unabhängig voneinander für
C₁-C₁₄-Alkyl, -Aryl oder -Aralkyl, -O(C₁-C₁₄-Alkyl, -Aryl oder -Aralkyl), -OCO(C₁-C₁₄-Alkyl, -Aryl oder -Aralkyl), -O-CO-O(C₁-C₁₄-Alkyl, -Aryl oder -Aralkyl), -H, -OH, -R, -RK, stehen,
- R⁴: = C₁-C₁₄-Alkyl, -Aryl oder -Aralkyl,
- A: = 0 - 4, bevorzugt 0 -2, besonders bevorzugt 0 oder 1, ganz besonders bevorzugt 0,
- B: = 0 - 6, bevorzugt 0 - 4, besonders bevorzugt 0, 1 oder 2, ganz besonders bevorzugt 0 oder 1, und
- C: = 0 - 6, bevorzugt 1 - 4, besonders bevorzugt 1 oder 2 ist;
wobei die Summe aus A + B + C höchstens 7 beträgt, und
wobei für C = 0 gilt, dass R³ = R und/oder R² = R ist.

Wenn die Einheit -[SiR⁴(Z-R)]-O- vorhanden ist, d. h. C mindestens 1 ist, so ist es möglich, dass R² und R³ verschieden von R sind.

Verbindungen der allgemeinen Formel (I), bei welchen A mindestens 1 ist, werden vorteilhaft in solchen Systemen eingesetzt, die einer Verträglichkeitsanpassung bedürfen.

Bei den der oben angegebenen Strukturformel entsprechenden Copolymeren kann es sich um statistische Copolymere, alternierende Copolymere oder um Blockcopolymere handeln. Auch kann durch die Abfolge der Seitenketten entlang dem Silikonrückgrat ein Gradient gebildet werden. Die A Einheiten der Formel -[SiR⁴(Z-RK)]-O-, die B Einheiten -Si(R⁴)₂-O- und die C Einheiten -[SiR⁴(Z-R)]-O- können in der Polysiloxankette in beliebiger Reihenfolge angeordnet sein.

Die kettenförmigen polyhydroxyfunktionellen Polysiloxane bestehen, wie aus der Struktur der Formel (I) und den entsprechenden Definitionen für A, B und C gefolgert werden kann, aus 2 bis 9 Siloxaneinheiten. Vorzugsweise bestehen die erfindungsgemäßen kettenförmigen polyhydroxyfunktionellen Polysiloxane aus 3 bis 7 Siloxaneinheiten, besonders bevorzugterweise aus 3 - 4 Siloxaneinheiten und ganz besonders bevorzugt aus 3 Siloxaneinheiten.

Um den polyhydroxyfunktionellen verzweigten Polyetheralkylrest -Z-R in das Si-H-funktionelle Polysiloxan einzubringen, bedient man sich vorzugsweise eines verzweigten polyhydroxyfunktionellen (Meth)Allylpolyethers, der sich durch ringöffnende Polymerisation von Glycidol oder Hydroxyoxetanen mit einer oder mehrere Hydroxygruppen tragenden (meth)allylischen Startverbindungen herstellen lassen. Diese verzweigten polyhydroxyfunktionellen (Meth)Allylpolyether können durch Addition in das Polysiloxan eingeführt werden. Sie besitzen üblicherweise genau eine (Meth)Allylgruppe, d.h. sie sind mono(meth)allylisch und wirken somit nicht als Vernetzer oder Verknüpfer zwischen zwei oder mehr Si-H-funktionellen Polysiloxanen.

Die (meth)allylischen Startverbindungen weisen mindestens eine Wasserstoff-aktive Gruppe auf. Unter Wasserstoff-aktiven Gruppen werden solche funktionellen Gruppen verstanden, die ein an ein Heteroatom gebundenes aktives Wasserstoffatom tragen, wie beispielsweise Hydroxygruppen (-OH), Aminogruppen (-NH₂), Aminoalkylgruppen (-NH(Alkyl)) oder Thiolgruppen (-SH).

Bevorzugt eingesetzt werden mono-hydroxyfunktionelle allylische Startverbindungen aus der Gruppe bestehend aus Allylalkohol, Ethylenglycol-monoallylether, Allylpolyethylenglykol, Allylpolypropylenglygol, Allylpolyethylen/polypropylenglyol-Mischpolymerisate, wobei Ethylenoxid und Propylenoxid in Random-Struktur oder blockweise angeordnet sein können.

Besonders bevorzugt werden als mono-hydroxyfunktionelle allylische Startverbindungen Allylalkohol, Ethylenglycol-monoallylether und Allylpolyethylenglykol eingesetzt. Ganz besonders bevorzugt sind Allylalkohol und Ethylenglycol-monoallylether.

Eingesetzt werden können auch die entsprechenden Methallyl-Verbindungen, wie z.B. Methallylalkohol, Methallylpolyethylenglykol, usw. Wenn im Rahmen dieser Erfindung von allylischen Startverbindungen gesprochen wird, umfaßt dieser Begriff auch die methallylischen Analoga, ohne dass dies gesondert angesprochen werden müßten. Wird der Begriff "(meth)allylisch" verwendet, so umfaßt dieser ebenfalls "allylisch" wie auch "methallylisch".

Auch andere mono-hydroxyfunktionelle allylische und methallylische Startverbindungen, wie z.B. Allylphenol können eingesetzt werden. Weitere Möglichkeiten sind die Verwendung von (Meth)allylischen Startverbindungen mit anderen Wasserstoff-aktiven Gruppen als der Hydroxygruppe, wie z.B. Amino- (-NH₂, -NH(Alkyl)) oder Thiol-Derivate.

Di-, tri- oder polyfunktionelle Startverbindungen können auch eingesetzt werden, die im Hinblick auf die Polydispersität und einige physikalische Eigenschaften Vorteile zeigen. Die Hydroxygruppen der di- oder polyfunktionellen monoallylischen Startverbindung sind vorzugsweise verethert mit einem Di-, Tri- oder Polyol, zum Beispiel einem Dihydroxy-, Trihydroxy- oder Polyhydroxy-Ester oder -Polyester oder einem Dihydroxy-, Trihydroxy- oder Polyhydroxy-Ether oder Polyether, wie zum Beispiel einem 5,5-Dihydroxyalkyl-1,3-dioxan, einem 5,5-Di(hydroxyalkoxy)-1,3-dioxan, einem 5,5-Di(hydroxyalkoxyalkyl)-1,3-dioxan, einem 2-Alkyl-1,3-propandiol, einem 2,2-Dialkyl-1,3-propandiol, einem 2-Hydroxy-1,3-propandiol, einem 2,2-Dihydroxy-1.,3-propandiol, einem 2-Hydroxy-2-alkyl-1,3-propandiol, einem 2-Hydroxyalkyl-2-alkyl-1,3-propandiol, einem 2,2-Di(hydroxyalkyl)-1,3-propandiol, einem 2-Hydroxyalkoxy-2-alkyl-1,3-propandiol, einem 2,2-Di(hydroxyalkoxy)-1,3-propandiol, einem 2-Hydroxyalkoxyalkyl-2-alkyl-1,3-propandiol oder einem 2,2-Di(hydroxyalkoxyalkyl)-1,3-propandiol.

Bevorzugte Ausführungsformen der genannten di- oder polyfunktionellen monoallylischen Startverbindung sind verethert mit Dimeren, Trimeren oder Polymeren von 5,5-Dihydroxyalkyl-1,3-dioxanen, 5,5-Di(hydroxyalkoxy)-1,3-dioxanen, 5,5-Di(hydroxyalkoxyalkyl)-1,3-dioxanen, 2-Alkyl-1,3-propandiolen, 2,2-Dialkyl-1,3-propandiolen, 2-Hydroxy-1,3-propandiolen, 2,2-Dihydroxy-1,3-propandiolen, 2-Hydroxy-2-alkyl-1,3-propandiolen, 2-Hydroxyalkyl-2-alkyl-1,3-propandiolen, 2,2-Di(hydroxyalkylfi,3-propandiolen, 2-Hydroxyalkoxy-2-alkyl-1,3-propandiolen, 2,2-Di(hydroxyalkoxy)-1;3-propandioten, 2-Hydroxyalkoxyatkyl-2-alkyl-1,3-propandiolen und 2,2-Di(hydroxyalkoxyalkyl)-1,3-propandiolen.

Bei den genannten Alkylresten handelt es sich vorzugsweise um lineare oder verzweigte C₁-C₂₄-, wie zum Beispiel C₁-C₁₂- oder C₁-C₈-, -Alkyle oder -Alkenyle. Besonders bevorzugt als Alkylreste sind Methyl- und Ethylreste. Der Ausdruck "Alkoxy" steht vorzugsweise für Methoxy, Ethoxy, Propoxy, Butoxy, Phenylethoxy und umfaßt bis zu 20 Alkoxyeinheiten oder eine Kombination von zwei oder mehr Alkoxy-Einheiten.

Weiter bevorzugte Ausführungsformen der allylischen Startverbindung mit mindestens zwei Hydroxylgruppen umfassen Monoallylether oder Monomethallylether des Glycerins, des Trimethylolethans und Trimethylolpropans, Monoallyl- oder Mono(methallyl)-Ether des Di(trimethylol)ethans, Di(trimethylol)propans und Pentaerythritol sowie von 1,Ω-Diolen, wie zum Beispiel Mono-, Di-, Tri- und Polyethylenglykolen, Mono-, Di-, Tri- und Polypropylenglykolen, 1,4-Butandiol, 1,5-Pentandiol, 1,6-Hexandiol, 1,6-Cyclohexandimethanol und deren entsprechend Alkyl-, Alkylalkoxy- und Alkoxyalkyl-substituierten Analoga sowie deren Derivate. Die Bezeichnungen "Alkyl" and "Alkoxy" entsprechen hier den zuvor genannten Definitionen.

Besonders bevorzugt ist die mindestens zwei Hydroxyverbindungen aufweisende allylische Startverbindung abgeleitet von einer Verbindung aus der Gruppe bestehend aus 5,5-Dihydroxymethyt-1,3-dioxan, 2-Methyl-1,3-propandiol, 2-Methyl-2-ethyl-1,3-propandiol, 2-Ethyl-2-butyl-1,3-propandiol, Neopentylglykol, Dimethylpropan, Glycerin, Trimethylolethan, Trimethylolpropan, Diglycerin, Di(trimethylolethan), Di(trimethylolpropan), Pentaerythritol, Di(pentaerythritol), Anhydroenneaheptitol, Sorbitol and Mannitol.

Besonders bevorzugt werden für die Polymerisation der verzweigten allylischen Polyether allylische Startverbindungen mit zwei Hydroxygruppen, wie beispielsweise Trimethylolpropanmonoallylether oder Glycerinmonoallylether, verwendet.

An derartigen allylischen Startverbindungen erfolgt die ringöffnende Polymerisation mit Glycidol oder mit Mischungen von Glycidol mit Glycidylethern und/oder mit Alkylenoxiden. Dabei kann die Polymerisation der Mischungen von Glycidol mit Glycidylethern und/oder mit Alkylenoxiden in Random-Struktur oder blockweise ausgeführt werden. Die Glycidylether können Alkyl- oder Polyalkylenoxid-substituiert sein.

Der Ausdruck "Alkyl-substituiert" steht hier vorzugsweise für eine Substitution mit linearen oder verzweigten C₁-C₂₄-, wie zum Beispiel C₁-C₁₂ oder C₁-C₈ -Alkylen oder -Alkenylen. Besonders bevorzugt steht der Ausdruck "Alkyl-substituiert" für eine Substitution mit Methyl, Ethyl, Propyl und/oder Butyl. Der Ausdruck "Polyalkylenoxid-substituiert" steht für eine Kombination von zwei oder mehr Alkylenoxid-Einheiten, vorzugsweise für eine Substitution mit Polyethylenoxid-, Polypropylenoxid- und/oder Polybutylenoxid-Einheiten.

Bevorzugt wird Glycidol als Hauptmonomer eingesetzt. Dies bedeutet, dass vorzugsweise mindestens 50 Mol-%, besonders bevorzugt mindestens 70 Mol-% und ganz besonders bevorzugt mindestens 90 Mol-% des Rests R aus Glycidolresten aufgebaut ist.

Das allyl-funktionelle hyperverzweigte Polyglycidol ist darstellbar über einen ringöffnenden Polymerisationsprozess. Um gut definierte Strukturen zu erhalten, wird eine anionische ringöffnende Polymerisation unter langsamer Monomerzugabe besonders bevorzugt durchgeführt.

Vorzugsweise wird die folgende Methode angewendet: die Hydroxygruppen des allylfunktionellen Initiators werden teilweise durch Alkalimetallhydroxide oder -alkoxide deprotoniert, und nach Entfernung des Wassers oder Alkohols durch Destillation wird eine Mischung aus Initiator und Initiator-Alkoholat erhalten. Dann wird das Glycidol bei einer Temperatur zwischen 80°C und 100°C tropfenweise zur Initiatorilnitiator-Alkoholat-Mischung gegeben Die lebende anionische ringöffnende Polymerisation wird durch den schnellen Austausch der Protonen zwischen den Alkohol- und Alkoholat-Gruppen der wachsenden Ketten kontrolliert.

Das Alkali, wird nach der Reaktion z.B. durch die Behandlung mit einem sauren Ionenaustauscher entfernt. Weitere Details zu Reaktionen, Reaktanden und Verfahrensweisen sind in folgenden Veröffentlichungen zu finden:
- Sunder A, Hanselmann R, Frey H, Müllhaupt R: . Macromolecules 1999; 32:4240-6
- EP1785410 (Polyglycerol monoethers and process for producing the same)
- US2003/0120022 (Method for producing highly-branched glycidol-based polyols)

Die Hydroxygruppen können frei bleiben oder können teilweise oder komplett modifiziert werden, um die optimale Kompatibilität in der Anwendungsformulierung einstellen zu können.

Die polyhydroxyfunktionellen Allylverbindungen weisen mindestens eine verzweigende Generation, bevorzugt mindestens zwei verzweigende Generationen auf. Der Ausdruck "Generation" wird, wie in der WO 02/40572, im vorliegenden Fall auch zur Bezeichnung von Pseudo-Generationen verwendet. Die Verzweigungen können beispielsweise durch NMR-Analyse nachgewiesen werden. Die Polydispersität (M_{w}/Mₙ) der verzweigten Allylverbindungen beträgt <3, bevorzugt <2 und besonders bevorzugt <1,5.

Die folgende Formel (II) zeigt ein bevorzugt erhaltenes dendrimeres Reaktionsprodukt, das Ethylenglykol-monoallylether und Glycidol in drei Generationen erhalten werden wird. Jedoch werden die erhaltenen Produkte in der Realität am besten als Pseudo-Dendrimere oder hyperverzweigte allyl-funktionelle Polyglycidole beschrieben.

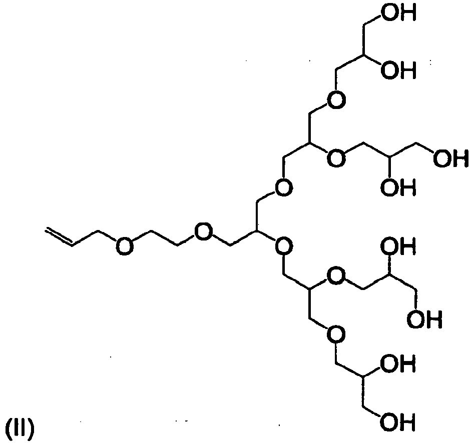

Die Synthese der polyhydroxyfunktionellen Polysiloxane erfolgt vorzugsweise über eine Addition der durch Umsetzung der allylischen Startverbindung mit mindestens einem Glycidol erhaltenen Allylpolyether an das Si-H-funktionelle Alkyl-Polysiloxan.

Das Glycidol kann durch Glycerolcarbonat ersetzt werden. Die Synthese von Glycerolcarbonat und die Reaktionsbedingungen, unter welchen diese zu hyperverzweigten Polyglycidolen umgesetzt werden, sind dem Fachmann beispielsweise aus Rokicki et al. in: Green Chemistry, 2005, 7, 529-539 bekannt.

Wenn hierin von hyperverzweigten Polyglycidolen die Rede ist, so können diese generell durch ringöffnende Polymerisation von entweder Glycidol oder Glycerolcarbonat erhalten werden. Wird hierin Bezug genommen auf eine ringöffnende Polymerisation von Glycidol, so umfasst dies generell auch die Variante, bei welcher Glycerolcarbonat ringöffnend umgesetzt wird, wobei der Fachmann gegebenenfalls die Reaktionsbedingungen an die bei Rockicki et al. (supra) beschriebenen anpasst.

In einer umweltschonenderen Ausführungsform der vorliegenden Erfindung wird Glycerolcarbonat zur Herstellung der hyperverzweigten Polyglycidolstrukturen eingesetzt. Glycerolcarbonat läßt sich umweltverträglicher herstellen als Glycidol und besitzt nach derzeitigen Erkenntnissen nicht die Karzinogenität des Glycidol.

Um den polyhydroxyfunktionellen verzweigten Polyetheralkylrest -Z-R in das Si-H-funktionelle Polysiloxan einzubringen, bedient man sich auch polyhydroxyfunktioneller dendritischer Allylpolyether, die sich durch ringöffnende Polymerisation von Hydroxyoxetanen, das heißt Verbindungen mit einer Oxetangruppe und mindestens einer Hydroxygruppe oder Hydroxyalkylgruppe, mit einer oder mehrere Hydroxygruppen tragenden allylischen Startverbindungen herstellen lassen. Diese verzweigten polyhydroxyfunktionellen Allylpolyether können durch Addition in das Polysiloxan eingeführt werden.

An derartigen allylischen Startverbindungen, die bereits oben ausführlich beschrieben wurden, erfolgt die ringöffnende kationische Polymerisation mit Hydroxyoxetanen. Diese können Alkyl- oder Hydroxyalkyl-substituiert sein. Vorzugsweise handelt es sich bei den erfindungsgemäß verwendeten Hydroxyoxetanen um mindestens ein 3-Alkyl-3-(hydroxyalkyl)oxetan, ein 3,3-Di(hydroxyalkyl)oxetan, ein 3-Alkyl-3-(hydroxyalkoxy)oxetan, ein 3-Alkyl-3-(hydroxyalkoxyalkyl)oxetan oder ein Dimer, Trimer oder Polymer eines 3-Alkyl-3-(hydroxyalkyl)oxetans, eines 3,3-Di(hydroxyalkyl)oxetans, eines 3-Alkyl-3-(hydroxyalkoxy)oxetans oder eines 3-Alkyl-3-(hydroxyalkoxyalkyl)oxetans. "Alkyl" steht hier vorzugsweise für lineare oder verzweigte C₁-C₂₄-, wie zum Beispiel C₁-C₁₂- oder C₁-C₈-, -Alkyle oder -Alkenyle. Besonders bevorzugt steht der Ausdruck "Alkyl" für Methyl und Ethyl. Der Ausdruck "Alkoxy" steht vorzugsweise für Methoxy, Ethoxy, Propoxy, Butoxy, Phenylethoxy und umfasst bis zu 20 Alkoxyeinheiten oder eine Kombination von zwei oder mehr Alkoxy-Einheiten.

Besonders bevorzugt wird als Hydroxyoxetan mindestens ein Hydroxyoxetan ausgewählt aus der Gruppe bestehend aus 3-Methyl-3-(hydroxymethyl)oxetan, 3-Ethyl-3-(hydroxymethyl)oxetan, 3,3-Di(hydroxymethyl)oxetan (Trimethylolpropanoxetan) verwendet. Es können auch Mischungen dieser Verbindungen eingesetzt werden.

Weitere Details zu Reaktionen, Reaktanten und Verfahrensweisen sind unter anderem in WO 02/40572 beschrieben.

Die polyhydroxyfunktionellen dendritischen Allylverbindungen basierend auf der ringöffenden Polymerisation von Hydroxyoxetanen weisen mindestens eine verzweigende Generation, bevorzugt eine bis zwei verzweigende Generationen auf. Der Ausdruck "Generation" wird, wie in der WO 02/40572, im vorliegenden Fall auch zur Bezeichnung von Pseudo-Generationen verwendet. Die Verzweigungen können beispielsweise durch NMR-Analyse nachgewiesen werden. Die Polydispersität der dendritischen Allylverbindungen beträgt bevorzugt < 2,8, besonders bevorzugt < 1,7.

Die folgende Formel (III) zeigt ein bevorzugt erhaltenes dendrimerartiges Reaktionsprodukt, das aus Trimethylolpropanmonoallylether und ethoxyliertem Trimethylolpropanoxetan in erster Generation erhalten werden kann. Wie aus der Formel zu ersehen, wird ein Dendrimer erster Pseudo-Generation gebildet.

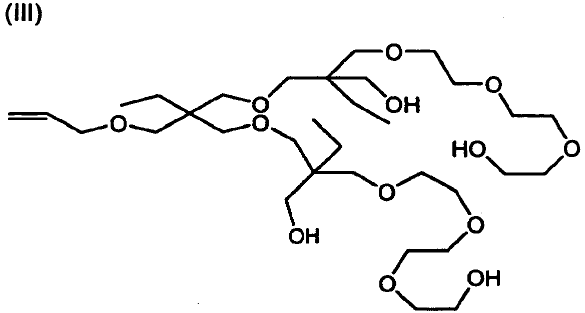

Die polyhydroxyfunktionellen Polysiloxane können durch Umsetzung mindestens einer allylischen Startverbindung mit mindestens einem Oxetan und nachfolgende Addition an das Si-H-funktionelle Alkyl-Polysiloxan hergestellt werden. Bevorzugt ist eine Umsetzung der mindestens einen allylischen Startverbindung mit mindestens einem Oxetan und nachfolgende Addition an das Si-H-funktionelle Alkyl-Polysiloxan.

Die polyhydroxyfunktionellen Allylpolyether, erhalten unter ringöffnender Polymerisation von Glycidol bzw. von Hydroxyoxetanen, können unterschiedliche durchschnittliche Anzahlen von Hydroxygruppen im Molekül aufweisen. Bevorzugt weisen die polyhydroxyfunktionellen Allylpolyether eine durchschnittliche Anzahl von 2 - 10 Hydroxygruppen pro Molekül auf.

Zur Einstellung einer besseren Verträglichkeit der aus diesen polyhydroxyfunktionellen Allylpolyethern hergestellten polyhydroxyfunktionellen Polysiloxane können die freien Hydroxygruppen der Allylpolyether auch vor oder nach der Hydrosilylierungsreaktion mit dem Si-H-funktionellen Polysiloxan alkoxyliert werden. Bevorzugt werden sie ethoxyliert und/oder propoxyliert und/oder butoxyliert und/oder mit Styroloxid alkoxyliert. Dabei können Reinalkoxylate oder Mischalkoxylate hergestellt werden. Besonders bevorzugt werden die freien Hydroxygruppen der Allylpolyether ethoxyliert.

Weiterhin können die freien Hydroxygruppen abgesehen von einer Alkoxylierung, auch auf andere Weise chemisch modifiziert werden. Beispielhaft zu nennen sind die Methylierung, die Acrylierung, die Acetylierung, die Veresterung und die Umsetzung zum Urethan durch eine Reaktion mit Isocyanaten. Ein Beispiel für die letztere Reaktion ist die Umsetzung der Hydroxygruppen mit z.B. TDI-Monoaddukten, die sich durch die Umsetzung von Polyethermonoolen mit TDI (Toluoldiisocyanat) darstellen lassen.

Auch alle anderen bekannten Modifikationsmöglichkeiten von Hydroxygruppen können angewendet werden. Die erwähnten chemischen Umsetzungen müssen dabei nicht vollständig erfolgen. So kann auch nur ein Teil der freien Hydroxygruppen, d.h. insbesondere mindestens eine Hydroxygruppe chemisch modifiziert sein.

Vorzugsweise wird die Modifizierung vor der Hydrosilylierungsreaktion durchgeführt. In diesem Fall kann die Modifizierung der freien Hydroxygruppen auch die nachfolgende Hydrosilylierungsreaktion positiv beeinflussen.

Über den Anteil der freien Hydroxygruppen im polyhydroxyfunktionellen Allylpolyether kann auch die Polarität beziehungsweise die Kompatibilität des polyhydroxyfunktionellen Polysiloxans in der thermoplastischen Matrix gesteuert werden. Bleiben viele oder alle der ursprünglichen Hydroxyfunktionen erhalten, wird eine hohe Polarität erhalten. Werden dagegen viele oder alle der ursprünglichen Hydroxygruppen blockiert, erhält das Molekül eine geringere Polarität.

Die polyhydroxyfunktionellen dendritischen Allylverbindungen basierend auf der ringöffnenden Polymerisation von Glycidol und polyhydroxyfunktionellen dendritischen Allylverbindungen basierend auf der ringöffnenden Polymerisation von Hydroxyoxetanen können jeweils alleine oder in Kombination mit den Alkyl-Wasserstoff-Siloxanen umgesetzt werden. Wenn der Einsatz im Kombination erfolgt, können beide Allylverbindungen in jedem Verhältnis gemischt werden.

Um Verträglichkeiten der polyhydroxyfunktionellen Polysiloxane mit den Thermoplasten, polymeren Formmassen oder mit den darauf zu applizierenden Beschichtungen anpassen zu können, kann es sinnvoll sein, in Kombination mit den erfindungsgemäß verwendeten polyhydroxyfunktionellen Allylverbindungen auch Allylpolyether einzusetzen, die durch die Alkoxylierung von Allylalkohol oder Monoallylethern mit einer oder mehreren Hydroxygruppen mit Alkylenoxiden, insbesondere Ethylenoxid und/oder Propylenoxid und/oder Butylenoxid und/oder Styroloxid, hergestellt werden. Diese schon seit langem bekannten Allylpolyether werden zur besseren Unterscheidung im Folgenden "unverzweigte Allylpolyether" genannt und führen zu "unverzweigten Polyetherresten" Z-RK im Polysiloxan. Dabei können sowohl Reinalkoxylate als auch Mischalkoxylate hergestellt werden. Bei Mischalkoxylaten kann die Alkoxylierung blockweise, alternierend oder statistisch sein. Auch können die Mischalkoxylate einen Verteilungsgradienten in Bezug auf die Alkoxylierung enthalten.

Die Endgruppen bzw. die Endgruppe des unverzweigten Allylpolyethers kann hydroxyfunktionell sein, oder aber, wie oben bereits bei den erfindungsgemäßen verzweigten polyhydroxyfunktionellen Allytpolyethern beschrieben wurde, beispielsweise durch Methylierung oder Acetylierung, umgesetzt sein.

Vorzugsweise handelt es bei dem unverzweigten Polyetherrest RK um ein Ethylenoxid ([EO]), ein Propylenoxid ([PO]) oder ein Ethylenoxid-Propylenoxid-Copolymer der folgenden Formel (III)

(III) RK = - O - [EO]ᵥ - [PO]_{w} - R⁶

mit v + w = 0 - 10
wobei R⁶ eine aliphatische, aromatische, araliphatische Verbindung darstellt, die auch Heteroatome enthalten kann, wie z.B. Ester, Urethan.

Durch unterschiedliche Anteile an ([EO]) und ([PO]) können die Eigenschaften des erfindungsgemäßen Polysiloxans beeinflusst werden. So kann speziell wegen der größeren Hydrophobie der [PO]-Einheiten im Vergleich zu den [EO]-Einheiten durch die Wahl geeigneter [EO]:[PO]-Verhältnisse die Hydrophobie des erfindungsgemäßen Polysiloxans gesteuert werden.

Bei den der oben angegebenen Strukturformel entsprechenden Copolymeren kann es sich um statistische Copolymere, alternierende Copolymere oder um Blockcopolymere handeln. Auch kann durch die Abfolge der Alkylenoxideinheiten ein Gradient gebildet werden.

Es ist möglich, nicht nur einen unverzweigten Allylpolyether einzusetzen. Zur besseren Steuerung der Verträglichkeit können auch Mischungen unterschiedlicher unverzweigter Allylpolyether eingesetzt werden.

Die Reaktionsführung kann so erfolgen, daß die unverzweigten Allylpolyether und die verzweigten Allylpolyether nacheinander an das Si-H-funktionelle Alkyl-Polysiloxan addiert werden. Die Allylpolyether können aber auch vor der Addition gemischt werden, so dass dann die Allylpolyethermischung an das Si-H-funktionelle Alkyl-Polysiloxan addiert wird.

Um Verträglichkeiten der polyhydroxyfunktionellen Polysiloxane mit den Thermoplasten oder polymeren Formmassen anpassen zu können, kann es sinnvoll sein, in Kombination mit den erfindungsgemäß verwendeten polyhydroxyfunktionellen Allylverbindungen auch Allylpolyester einzusetzen, die durch die Veresterung von Alkoholen mit allylischer Doppelbindung (1-Alkenolen, wie z.B. 1-Hexenol, oder hydroxyfunktionelle Allylpolyethem, wie z.B. Ethylenglykolmonoallylether, Diethylglykolmonoallylether oder höhere Homologe) mit Hydroxycarbonsäuren, bzw. cyclischen Estern erhalten werden können. Bevorzugt erfolgt die Veresterung über eine ringöffnende Polymerisation mit Propiolacton, Caprolacton, Valerolacton oder Dodecalacton, sowie deren Derivaten. Besonders bevorzugt erfolgt die ringöffnende Polymerisation mit Caprolacton. Dabei können sowohl Reinpolyester als auch Mischpolyester hergestellt werden. Bei Mischpolyestern kann die Veresterung blockweise, alternierend oder statistisch sein. Auch können die Mischpolyester einen Verteilungsgradienten in Bezug auf die Veresterung enthalten.

Die Endgruppen des Allylpolyesters können hydroxyfunktionell sein, oder aber beispielsweise durch Methylierung oder Acetylierung umgesetzt sein.

Die Reaktionsführung kann so erfolgen, daß die Allylpolyester und die verzweigten Allylpolyether nacheinander an das Si-H-funktionelle Alkyl-Polysiloxan addiert werden. Die verzweigten Allylpolyether und die Allylpolyester können aber auch vor der Addition gemischt werden, so dass dann diese Mischung an das Si-H-funktionelle Alkyl-Polysiloxan addiert wird.

Um Verträglichkeiten der polyhydroxyfunktionellen Polysiloxane mit den Thermoplasten oder polymeren Formmassen anpassen zu können, kann es sinnvoll sein, in Kombination mit den erfindungsgemäß verwendeten polyhydroxyfunktionellen Allylverbindungen auch Mischungen aus den o.g. unverzweigten Allylpolyethern und Allylpolyestern einzusetzen.

Generell können die Verträglichkeiten der polyhydroxyfunktionellen Polysiloxane auf die unterschiedlichsten Matrizes angepaßt werden. Um die polyhydroxyfunktionellen Polysiloxane beispielsweise in Polycarbonaten einzusetzen zu können, kann man in die polyhydroxyfunktionellen Polysiloxane entsprechende Polycarbonat-Modifizierungen einbauen, wie dies z. B. in der US 6,072,011 beschrieben ist.

Die eingesetzten Si-H-funktionellen Alkyl-Polysiloxane können auch streng monofunktionell sein, das heißt nur ein Silan-Wasserstoff-Atom aufweisen. Mit ihnen können bevorzugte Verbindungen erzeugt werden, in denen exakt eine der Gruppen R² oder R³ für einen Rest R steht. Die monofunktionellen Si-H-funktionellen Alkyl-Polysiloxane können zum Beispiel durch die folgende allgemeine Formel (V) dargestellt werden: 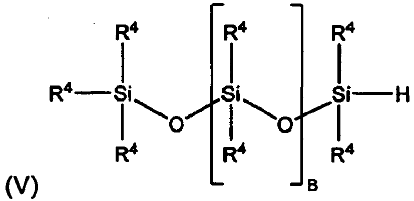 für die die oben genannten Definitionen für R⁴ und B gelten. Diese Verbindungen liefern polyhydroxyfunktionelle Polysiloxane der allgemeinen Formel (VI) 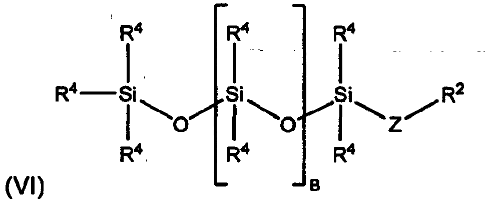 für die die oben genannten Definitionen für Z, R², R⁴ und B gelten. In diesem Fall steht die Gruppe R² für den Rest R.

Die Synthese dieser linearen monofunktionellen Polysiloxane kann beispielsweise über eine lebende anionische Polymerisation cyclischer Polysiloxane erfolgen. Dieses Verfahren ist unter anderem bei T. Suzuki in Polymer, 30 (1989) 333 beschrieben. Die Reaktion wird beispielhaft in folgendem Reaktionsschema dargestellt:

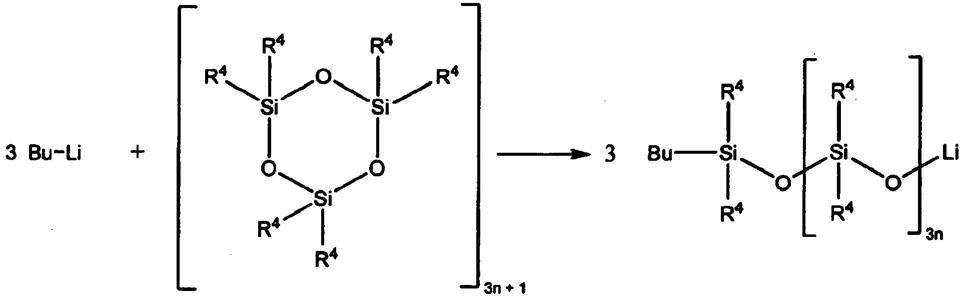

Die SiH(R⁴)₂-Funktionalisierung der Endgruppe kann mit funktionellen Chlorsilanen, beispielsweise Dialkylchlorsilan, analog dem folgenden Reaktionsschema nach dem Durchschnittsfachmann bekanntem Verfahren erfolgen.

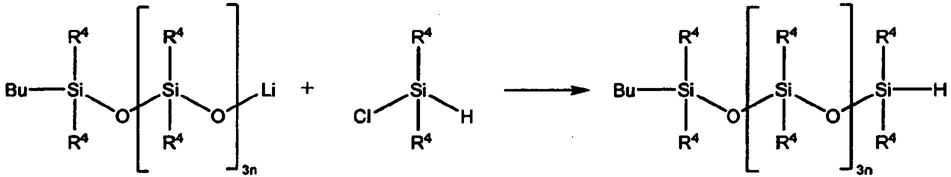

Eine weitere Möglichkeit zur Herstellung linearer, monofunktioneller Polysiloxane ist die Äquilibrierung cyclischer und offenkettiger Polydialkylsiloxane mit endständig Si-H-difunktionellen Polydialkylsiloxanen, wie bei Noll (Chemie und Technologie der Silicone, VCH, Weinhelm, 1984) beschrieben. Aus statistischen Gründen besteht das Reaktionsprodukt aus einer Mischung cyclischer, difunktioneller, monofunktioneller und nicht funktioneller Siloxane. Der Anteil an linearen Siloxanen im Reaktionsgemisch kann durch eine destillative Entfernung der niederen Zyklen erhöht werden. Innerhalb der linearen Polysiloxane sollte der Anteil SiH(R⁴)₂-monofunktioneller Polysiloxane im Reaktionsprodukt der Äquilibrierung möglichst hoch sein. Wenn Mischungen linearer Polysiloxane eingesetzt werden, so gilt für die Wirksamkeit der späteren erfindungsgemäßen Produkte, daß diese um so höher ist, je höher der Anteil der monofunktionellen erfindungsgemäßen Endprodukte ist. Beim Einsatz von Mischungen sollte der Anteil der monofunktionellen erfindungsgemäßen Endprodukte vorzugsweise der größte Anteil in der Mischung sein und bevorzugt mehr als 40 Gew.% betragen. Typische an cyclischen Verunreinigungen abgereicherte Äquilibrierungsprodukte enthalten vorzugsweise weniger als 40 Gew.-% difunktioneller und weniger als 15 Gew.-% nichtfunktioneller linearer Polysiloxane, wobei insbesondere letztere zu weniger als 5 Gew.-%, am besten überhaupt nicht, enthalten sind.

Ein Beispiel eines erfindungsgemäßen kettenartigen polyhydroxyfunktionellen Polysiloxans zeigt die folgende Formel (VII):

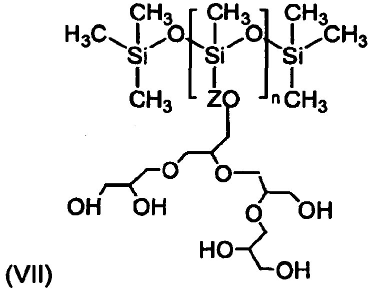

Ein Umsetzungsbeispiel eines monofunktionellen Silikons mit einem verzweigten Polyetherrest zeigt die folgende Formel (VIII):

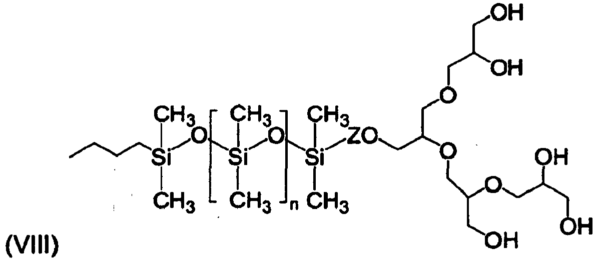

Die Hydrosilylierung, d.h. die Umsetzung der Si-H-funktionelle Alkyl-Polysiloxane mit den polyhydroxyfunktionellen dendritischen Allylverbindungen, erfolgt in Gegenwart eines säurepuffernden Agens. Als säurepufferndes Agens können beispielsweise Natriumacetat oder Kaliumacetat in Mengen von 25 bis 200 ppm eingesetzt werden. Typischerweise erfolgt die Hydrosilylierung unter den folgenden Bedingungen: Das Si-H-funktionelle Alkyl-Polysiloxan wird bei Raumtemperatur vorgelegt. Dann werden beispielsweise 25 bis 100 ppm einer Kaliumacetatlösung zugegeben, um eventuell ablaufende Nebenreaktionen zu unterdrücken. Abhängig von der zu erwartenden Exothermie der Reaktion wird ein Teil oder die Gesamtmenge der Allylverbindungen zugegeben. Unter einer Stickstoffatmosphäre wird dann der Reaktorinhalt auf 75°C bis 80°C erwärmt. Ein Katalysator, wie ein Übergangsmetall, beispielsweise Nickel, Nickelsalze, Iridiumsalze oder vorzugsweise ein Edelmetall der Gruppe VIII, wie beispielsweise Hexachloroplatinsäure oder cis-Diamminplatin(II)-dichlorid, wird dann zugesetzt. Durch die dann ablaufende exotherme Reaktion steigt die Temperatur. Normalerweise wird versucht, die Temperatur in einem Bereich von 90°C bis 120°C zu halten. Falls ein Teil der Allylverbindungen noch zudosiert werden muß, erfolgt die Zugabe in der Art, daß die Temperatur von 90°C bis 120°C nicht überschritten wird, aber auch eine Temperatur von 70°C nicht unterschritten wird. Nach vollständiger Zugabe wird die Temperatur noch für einige Zeit bei 90°C bis 120°C gehalten. Der Ablauf der Reaktion kann durch Infrarot-Spektroskopie auf das Verschwinden der Absorptionsbande des Siliciumhydrids (Si-H: 2150 cm⁻¹) überwacht werden.

Die erfindungsgemäßen polyhydroxyfunktionellen Polysiloxane können nachträglich noch chemisch modifiziert werden, um beispielsweise bestimmte Verträglichkeiten mit Bindemitteln einzustellen. Die Modifizierungen können beispielsweise durch Acetylierung, Methylierung, oder Umsetzung mit Monoisocyanaten (z.B. TDI-Monoaddukten, die sich durch die Umsetzung von Polyethermonoolen mit TDI (Toluoldiisocyanat) darstellen lassen) durchgeführt werden. Außerdem können durch Umsetzung mit Carbonsäureanhydriden, beispielsweise mit Phthalsäureanhydrid oder Bernsteinsäureanhydrid, Säurefunktionen eingebaut werden. Dabei können die Hydroxygruppen partiell oder vollständig umgesetzt werden. Durch Umsetzung mit entsprechenden ungesättigten Anhydriden, beispielsweise Maleinsäureanhydrid, kann neben einer Carboxygruppe auch eine oder mehrere reaktive Doppelbindung in das Molekül eingebaut werden. Dabei können die Hydroxyfunktionen auch mit strukturell verschiedenen Anhydriden umgesetzt werden. Die Carboxygruppen können, um eine bessere Wasserlöslichkeit zu erzielen, auch noch mit Alkanolaminen versalzt werden. Weiterhin können durch nachträgliche Acrylierung oder Methacrylierung an der Hydroxygruppen Produkte erhalten werden, die sich auch bei strahlenhärtenden Prozessen, wie UV- und Elektronenstrahlhärtung, fest in Lacksysteme einbauen lassen. Die Hydroxygruppen können auch durch ringöffnende Polymerisation mit Propiolacton, Caprolacton, Valerolacton oder Dodecalacton, sowie deren Derivaten verestert werden. Besonders bevorzugt erfolgt die ringöffnende Polymerisation mit Caprolacton. Dabei können sowohl Reinpolyester als auch Mischpolyester hergestellt werden. Bei Mischpolyestern kann die Veresterung blockweise, alternierend oder statistisch sein. Auch können die Mischpolyester einen Verteilungsgradienten in Bezug auf die Veresterung enthalten.

Gegenstand der vorliegenden Erfindung sind neben den beschriebenen erfindungsgemäßen Polysiloxanen und der erfindungsgemäßen Verwendung dieser Polysiloxane auch die oben und in den Patentansprüchen angegebenen Verfahren zur Herstellung der erfindungsgemäßen Polysiloxane.

Gegenstand der vorliegenden Erfindung ist weiterhin ein Verfahren zur Erhöhung der Oberflächenenergie von Thermoplasten und polymeren Formmassen, sowie die erhaltenen Thermoplasten und polymeren Formmassen selbst.

Bei dem erfindungsgemäßen Verfahren zur Erhöhung der Oberflächenenergie von Thermoplasten und polymeren Formmassen werden dem Thermoplast oder der polymeren Formmasse vor der Polymerisation 0,1 - 10 Gew.%, bevorzugt von 0,1 bis 7,5 Gew.%, ganz besonders bevorzugt von 0,1 bis 5 Gew.%, bezogen auf den resultierenden Thermoplasten bzw. die resultierende Formmasse, mindestens eines erfindungsgemäßen Polysiloxans zugesetzt. Durch diese erfindungsgemäße Verwendung der erfindungsgemäßen Polysiloxane als Additiv in Thermoplasten oder polymeren Formmassen werden die erfindungsgemäßen Thermoplasten und polymeren Formmassen erhalten.

Die erfindungsgemäßen Thermoplaste, oder auch -blends bzw. polymeren Formmassen enthalten die polyhydroxyfunktionellen Polysiloxane als aktive Wirksubstanz (100%ige Form), in Mengen von 0,1 bis 10 Gew.-%, bevorzugt von 0,1 bis 7,5 Gew.-%, ganz besonders bevorzugt von 0,1 bis 5 Gew.-% bezogen auf den Thermoplasten bzw. die polymere Formmasse oder Polymermischung.

Die mit den erfindungsgemäßen polyhydroxyfunktionellen Polysiloxanen hergestellten Thermoplaste können pigmentiert oder unpigmentiert eingesetzt werden, außerdem können die Thermoplaste, bzw. auch - blends und polymere Formmassen, handelsübliche Füllstoffe, wie z.B. Calciumcarbonat, Aluminiumhydroxid, Talkum, Wollasitonit und / oder verstärkende Fasern wie Glasfasern, C-Fasern und Aramidfasern enthalten. Des weiteren können die mit den erfindungsgemäßen polyhydroxyfunktionellen Polysiloxanen hergestellten Thermoplaste, bzw. auch - blends und polymere Formmassen, andere handelsübliche Additive und / oder Zusatzstoffe, wie beispielsweise Netz- und Dispergiermittel, Lichtschutz- und Alterungsschutzmittel, Säurefänger sowie auch Nukleierungsmittel, und dergleichen, sowie Prozesshilfsstoffe, wie z.B. Schmier-bzw. Trennmittel und auch sogenannte Processing aids enthalten. Die jeweils verwendeten Arten und Mengen dieser Additive bzw. Zusatzstoffe richten sich nach der jeweiligen Anforderung an das zu fertigende Endprodukt. Ebenso nach Kenntnis der Person, die in den jeweiligen Anforderungsgebiet arbeitet. Üblicherweise werden ein oder mehrere dieser Additive, einzeln und / oder miteinander kombiniert, je nach Typ bis zu 8 Gew.% (bezogen auf die Gesamtmischung) verwendet.

Als Zusatzstoffe wie
- handesübliche Füllstoffe (wie zuvor beispielhaft genannt)
- Pigmente oder Farbstoffe
- Weichmacher
werden üblicherweise ein oder mehrere Zusatzstoffe, einzeln und/oder kombiniert, bis zu 90 Gew.% (bezogen auf die Gesamtmischung) verwendet.

Additive bzw. Zusatzstoffe dieser Art sind generell kommerziell verfügbar und z.B. in Gächter/Müller, Plastics additives Handbook 4. Auflage, Hansa Verlag; München, 1993 beschrieben und gelistet.

Bei den mit den erfindungsgemäßen polyhydroxyfunktionellen Polysiloxanen hergestellten polymeren Formmassen handelt es sich bevorzugt um polymere Formmassen aus ungesättigten Polyesterharzen, Epoxidharzen, Vinylesterharzen, Polyesterharzen, Polyurethanharzen und/oder Alkydharzen. Die polymeren Formmassen können ebenfalls in jeder beliebigen Kombination pigmentiert und/oder mit den oben genannten Füllstoffen bzw. Additiven gefüllt sein.

Bei den mit den erfindungsgemäßen polyhydroxyfunktionellen Polysiloxanen hergestellten Blends handelt es sich besonders bevorzugt um Mischungen aus homo- und/oder copolymeren Thermoplasten. Als Thermoplaste im Sinne der Erfindung zählen z.B. Polyethylen, Polypropylen, Polyoxymethylen, Ethylenvinylacetate (EVA) Poly(meth)acrylate, Polyacrylnitril, Polystyrol, styrolische Kunststoffe (z.B. ABS, SEBS, SBS), Polyester, Polyvinylester, Polycarbonate (PC), Polyethylenterephthalat (PET), Polybutylenterephthalat (PBT), Polyamide (PA), Polybutadiene (PB), thermoplastische Polyurethane (TPU), thermoplastische Elastomere (TPE) Polyvinylchlorid (mit und ohne Weichmacher), sowie auch Polylactic acid (PLA). Die Thermoplaste können gefüllt und/oder pigmentiert sein. Unter den Begriff Thermoplaste," im Sinne der Erfindung fallen auch Mischungen (Blends) verschiedenartiger Thermoplaste. Bei den Thermoplasten kann es sich beispielsweise auch um dem Durchschnittsfachmann bekannte verspinnfähige thermoplastische Fasern handeln, wie beispielsweise PP-, Polyester- oder Polyamidfasern.

Die erfindungsgemäßen Polysiloxane sind zur Erhöhung der Oberflächenenergie von Thermoplasten und polymeren Formmassen besonders gut geeignet. Es werden Thermoplaste und polymere Formmassen erhalten, die typische Eigenschaften aufweisen, welche aus der Erhöhung der Oberflächenenergie resultieren, wie z.B. ein verringerter Kontaktwinkel mit Wasser, verbesserte antistatische Eigenschaften und eine verbesserte Haftung von Beschichtungen wie Lacken oder Druckfarben.

Die Oberflächenenergie der Thermoplasten und polymeren Formmassen kann beispielsweise durch die Messung des statischen Kontaktwinkels der Oberfläche mit Wasser bestimmt werden. Je kleiner der statische Kontaktwinkel der Oberfläche mit Wasser ist, desto größer ist die Oberflächenenergie der Oberfläche. Die Messung des statischen Kontaktwinkels kann mit handelsüblichen, dem Fachmann bekannten Kontaktwinkel-Meßgeräten erfolgen, beispielsweise mit einem Kontaktwinkel-Messgerät der Fa. Krüss (Modell Easy Drop, ausgestattet mit einer Kamera).

Die erfindungsgemäßen Thermoplasten und polymeren Formmassen weisen eine höhere Oberflächenenergie auf als Thermoplasten bzw. polymere Formmassen, die die erfindungsgemäßen Polysiloxane nicht enthalten.

Die Bedruckbarkeit der Thermoplasten und polymeren Formmassen kann beispielsweise dadurch charakterisiert werden, dass auf den Thermoplasten bzw. die polymere Formmasse eine Druckfarbe aufgebracht wird und anschließend die Haftung der Druckfarbe auf der Oberfläche des Thermoplasten bzw. polymeren Formmasse überprüft wird. Dies kann beispielsweise durch das Anpressen und Abziehen einer Klebefolie (wie z.B. Tesafilm) auf die bedruckte Oberfläche vor und/oder nach dem Trocknen der Druckfarbe erfolgen.

Unter Druckfarben im Sinne dieser Erfindung werden farbmittelhaltige Zubereitungen mit unterschiedlicher Konsistenz verstanden. Im Gegensatz zu Beschichtungsmitteln sollen Druckfarben keinen Schutz für den bedruckten Untergrund darstellen, sondern färben beim typischen Druckprozess Teile des Untergrunds an und lassen andere Teile des Untergrunds ungefärbt. Die beim typischen Druckvorgang gebildeten Farbschichten sind viel dünner als bei Anstrichmitteln. Eine typische Druckfarbe kann neben Farbmitteln auch Füllstoffe, Bindemittel, Lösemittel, Verdünnungsmittel und/oder weitere Hilfsstoffe enthalten.

Die erfindungsgemäßen Thermoplasten und polymeren Formmassen weisen eine bessere Bedruckbarkeit auf als Thermoplasten bzw. polymere Formmassen, die die erfindungsgemäßen Polysiloxane nicht enthalten.

Die erfindungsgemäßen Polysiloxane und Thermoplasten bzw. polymeren Formmassen können als Additiv, aber auch als Masterbatch (Konzentrat) oder auch als Direktcompound verwendet werden.

Die erfindungsgemäßen Polysiloxane und Thermoplasten bzw. polymeren Formmassen finden im allgemeinen ihren Einsatz in Zwischenprodukten (Halberzeugnissen) und Fertigwaren (Endprodukten) in der Thermoplastindustrie. Die Zwischen- und Endprodukte können beispielsweise mittels Extrusionsverfahren, Spritzguß oder auch speziellen Verfahren wie Rotationsschleuderguß oder Compoundierung gefertigt werden. Es kann sich beispielsweise um Folien unterschiedlichster Art handeln. Die erfindungsgemäßen Thermoplasten oder polymeren Formmassen können also beispielsweise in Form von Extrudaten, Fasern, Folien oder Formteilen vorliegen. Zusätzliche, anschließende Verarbeitungsschritte wie z.B. Faserspinnverfahren, Tiefziehverfahren und/oder andere in der produktionstechnischen Industrie bekannten Weiterverarbeitungsverfahren können die Wirkung der erfindungsgemäßen Produkte sogar noch verstärken.

Die folgenden Beispiele erläutern die Erfindung, ohne beschränkend zu wirken:

### Beispiele

### I). Herstellung der Allylpolyether 1-7

### Synthese eines allyl-funktionellen Polyglycidols (Allylpolyether 1)

In einen 1000 ml 4-Halskolben ausgestattet mit Rührer, Thermometer, Destillationsbrücke und Tropftrichter wurden 22,71 g Kalium-tert.-Butanolat, 100 ml THF und 120 mg BHT eingefüllt und bei ca. 20°C unter N2-Atmosphäre gerührt (leichter N2-Strom während der gesamten Reaktion). Dann wurden 344,63 g Ethylenglycofmonoallylether langsam zugegeben, wobei die Temperatur auf 35°C stieg. Die resultierende braun-orange Lösung wurde für 15 min. auf 40°C erwärmt. Anschließend wurde die Temperatur auf 90°C erhöht und innerhalb einer Stunde THF und tert.-Butanol abdestilliert. 500 g Glycidol wurden langsam in 6 Stunden zugetropft. Nach Ende der Zudosierung von Glycidol wurde eine weitere Stunde bei 110°C gerührt. Eine Kontrolle über NMR ergab eine vollständige Umsetzung. Nach Abkühlung auf Raumtemperatur wurden 200 ml Methanol zugegeben und das Produkt mit 400 ml Amberlite IR120 H neutralisiert. Nach Abfiltration des Ionentauschers wurde unter Vakuum Methanol entfernt.

### Synthese weiterer allyl-funktioneller Polyglycidole (Allylpolyether 2 bis 5)

Die Herstellung der Allylpolyether 2-5 erfolgte analog Polyether 1, mit dem Unterschied, dass ein anderer Initiator bzw. andere Glycidol-Verhältnisse gewählt wurden.

### Synthese eines allyl-funktionellen Polyglycidols mit anschließender Ethoxylierung (Allylpolyether 8)

Die Herstellung des Allylpolyether 8 erfolgte analog Allylpolyether 1, wobei ein anderes Glycidol-Verhältnis (4 Mol Glycidol pro 1 Mol Allyl-Startverbindung) gewählt wurde, mit anschließender Alkoxylierung mit Ethylenoxid. Die anschließende Ethoxylierung wurde nach hinreichend bekanntem Verfahren durchgeführt.

### Synthese eines allyl-funktionellen Allylpolyethers auf Basis eines Trimethylolpropanoxetan-Ethoxylats (Allylpolyether 6)

In einen 250 ml 4-Halskolben ausgestattet mit Rührer, Thermometer, Rückflußkühler und Tropftrichter wurden 46,9 g Ethylenglykolmonoallylether unter N2-Atmosphäre vorlegt und auf 110°C erwärmt (ein leichter N2-Strom wurde während der gesamten Reaktion beibehalten). Bei Erreichen einer Temperatur von ca. 50°C wurden 0,5 g BF3-Etherat zugegeben. Bei 110°C wurde die Dosierung von 120 g ethoxyliertem Trimethylolpropanoxetan (TOP33) gestartet. Die Dosierung war in 40 Minuten beendet. Danach wurde der Ansatz 6 h bei 110°C gehalten. Man erhielt eine leicht gelbe viskose Flüssigkeit.

### Synthese eines allyl-funktionellen Allylpolyethers durch Umsetzung eines Allylpolyethers auf Basis 1 mol Trimethylolpropanmonoallylether und 2 mol Trimethylolpropanoxetan durch Umsetzung mit einem TDI-MPEG350-Monoadduktt (Allylpolyether 7)

31.1 g eines Allylpolyethers mit theoretisch 4 OH-Gruppen, der aus der Umsetzung von Trimethylolpropanmonoallylether mit Trimethylolpropanoxetan im Molverhältnis 1:2. erhalten wird (Iodzahl = 63,3 g I₂/100g) und 81,9 g eines Mono-Adduktes aus TDI und MPEG350 (7,7% Isocyanat) werden bei Raumtemperatur in einem 250 ml 4-Halskolben, ausgestattet mit Rührer, Thermometer, Rückflußkühler und Tropftrichter vorgelegt. Während der gesamten Reaktion wird Stickstoff übergeleitet. Die Mischung wird auf 60°C erwärmt und ca. 4 Stunden bei diesem Bedingungen gehalten. Bei der folgenden Analyse der Reaktionsmischung war kein Isocyanat mehr nachweisbar. Man erhielt eine leicht gelbe viskose Flüssigkeit.

### II.) Umsetzung von Methyl-Wasserstoff-Siloxanen mit verschiedenen Allylpolyethern

### Beispiel 5

### Umsetzung eines Methyl-Wasserstoff-Siloxans mit der mittleren Durchschnittsformel MD^{H}₁M und Allylpolyether 6

In einem 250-ml-3-Halskolben mit Rührer, Thermometer, Rückflußkühler wurden bei Raumtemperatur 18,90 g eines Methyl-Wasserstoff-Siloxans mit der mittleren Durchschnittsformel MD^{H}₁M, 41,10 g Allylpolyether 6, 0,03 g BHT, 0,06 g einer 10%igen ethanolischen Kaliumacetat-Lösung vorgelegt. Unter Stickstoffatmosphäre wurde die Mischung auf ca. 80°C erwärmt. Bei Erreichen dieser Temperatur wurden ca. 0,18 g einer 0,6%igen isopropanolischen Lösung von Speier's Catalyst zugegeben. Durch die exotherme Reaktion steigt die Temperatur an und wird nach Abklingen der ersten Exothermie auf 105°C eingestellt. Nach ca. 6 Stunden unter diesen Bedingungen waren gasvolumetrisch keine Si-H-Gruppen mehr nachweisbar. In der nachfolgenden Destillation werden bei einem Vakuum von etwa 20 mbar bei 130°C in einer Stunde alle flüchtigen Bestandteile abdestilliert. Man erhält ein hellbraunes, leicht trübes, viskoses Produkt.

### Beispiel 6

### Umsetzung eines Methyl-Wasserstoff-Siloxans mit der mittleren Durchschnittsformel MD^{H}₁D₁M und Allylpolyether 1

In einem 250-ml-3-Halskolben mit Rührer, Thermometer, Rückflußkühler werden bei Raumtemperatur 59,95 g eines Methyl-Wasserstoff-Siloxans mit der mittleren Durchschnittsformel MD^{H}₁D₁M und 70,05 g Allylpolyether 1 vorgelegt und 0,26 g Kaliumacetat-Lösung (10Gew.%ig in Ethanol) unter Stickstoffatmosphäre auf 80°C erwärmt. Bei Erreichen dieser Temperatur werden 0,039 g Speiers's catalyst (6 Gew.%ige Lösung in Isopropanol) zugegeben. Die Temperatur wird auf 100°C erhöht und der Ansatz 120 Minuten bei diesen Bedingungen gehalten. Eine gasvolumetrische Bestimmung der verbleibenden Si-H-Gruppe ergibt einen Umsetzungsgrad von 100%.

### Beispiel 16

### Umsetzung eines Methyl-Wasserstoff-Siloxans mit der mittleren Durchschnittsformel MD^{H}_{1,5}D₅M und Allylpolyether 7

In einem 250-ml-3-Halskolben mit Rührer, Thermometer, Rückflußkühler wurden bei Raumtemperatur 17,79 g eines Methyl-Wasserstoff-Siloxans mit der mittleren Durchschnittsformel MD^{H}_{1,5}D₅M, Jodzahl-Si-H = 63,2 mg KOH/g, 86,2 g Allylpolyether 7, 0,03 g BHT und 0,05 g einer 10%igen ethanolischen Kaliumacetat-Lösung vorgelegt. Unter Stickstoffatmosphäre wurde die Mischung auf ca. 80°C erwärmt. Bei Erreichen dieser Temperatur wurden ca. 0,52 g einer 0,6%igen isopropanolischen Lösung von Speier's Catalyst zugegeben. Durch die exotherme Reaktion steigt die Temperatur an und wird nach Abklingen der ersten Exothermie auf 110°C eingestellt. Nach ca. 5 Stunden unter diesen Bedingungen waren gasvolumetrisch keine Si-H-Gruppen mehr nachweisbar. In der nachfolgenden Destillation werden bei einem Vakuum von etwa 20 mbar bei 130°C in einer Stunde alle flüchtigen Bestandteile abdestilliert. Man erhält ein hellbraunes, leicht trübes, viskoses Produkt.

### Beispiel 17

### Umsetzung eines Methyl-Wasserstoff-Siloxans mit der mittleren Durchschnittsformel MD^{H}₂D₁M und alpha-olefine C8 und Allylpolyether 2

In einem 250-ml-3-Halskolben mit Rührer, Thermometer, Rückflußkühler werden bei Raumtemperatur 51,8 g eines Methyl-Wasserstoff-Siloxans mit der mittleren Durchschnittsformel MD^{H}₂D₁M, 21,11 g alpha-olefine C8 und 77,1 g Allylpolyether 2 sowie 0,3 g Kaliumacetat-Lösung (10 Gew.% in Ethanol) und 50,0 g Dowanol PM vorgelegt, und unter Stickstoffatmosphäre auf 80°C erwärmt. Bei Erreichen dieser Temperatur werden 0,52 g Speiers's catalyst (6 Gew.%ige Lösung in Isopropanol) zugegeben. Die Temperatur wird auf 100°C erhöht und der Ansatz 120 Minuten bei diesen Bedingungen gehalten. Eine gasvolumetrische Bestimmung der verbleibenden Si-H-Gruppen ergibt eine vollständige Umsetzung.

### Beispiel 18

### Umsetzung eines Methyl-Wasserstoff-Siloxans mit der mittleren Durchschnittsformel MD^{H}₂D₁M und Allylpolyether RK₁ und Allylpolyether 4

In einem 250-ml-3-Halskolben mit Rührer, Thermometer, Rückflußkühler werden bei Raumtemperatur 47,4 g eines Methyl-Wasserstoff-Siloxans mit der mittleren Durchschnittsformel MD^{H}₂D₁M, 37,9 g Allylpolyether RK₁ und 64,6 g Allylpolyether 4 sowie 0,3 g Kaliumacetat-Lösung (10 Gew.% in Ethanol) und 37,5 g Dowanol PM vorgelegt, und unter Stickstoffatmosphäre auf 80°C erwärmt. Bei Erreichen dieser Temperatur werden 0,52 g Speiers's catalyst (6 Gew.%ige Lösung in Isopropanol) zugegeben. Danach wird die Temperatur auf 100°C erhöht und 4 Stunden gehalten. Eine gasvolumetrische Bestimmung der verbleibenden Si-H-Gruppen ergibt eine vollständige Umsetzung.

### Beispiel 20

In einem 500-ml-3-Halskolben mit Rührer, Thermometer, Rückflußkühler werden bei Raumtemperatur 87,2 g eines Methyl-Wasserstoff-Sitoxans mit der mittleren Durchschnittsformel MD^{H}₁D₁M , 212,8 g Allylpolyether 8 , 100,0 g Methoxypropanol und 0,45 g Kaliumacetat-Lösung (10Gew.%ig in Ethanol) vorgelegt , unter Stickstoffatmosphäre auf 80°C erwärmt. Bei Erreichen dieser Temperatur werden 0,1g Speiers's catalyst (6 Gew.%ige Lösung in Isopropanol) zugegeben. Die Temperatur wird auf 100°C erhöht und der Ansatz 120 Minuten bei diesen Bedingungen gehalten. Eine gasvolumetrische Bestimmung der verbleibenden Si-H-Gruppe ergibt einen Umsetzungsgrad von 100%.

### Weitere Beispiele

Die anderen Produkte der vorliegenden Erfindung wurden analog wie in den oben angegebenen Beispielen beschrieben hergestellt. Die Strukturen aller Substanzen sind in der folgenden Tabelle beschrieben, werden durch diese aber nicht begrenzt.

**Tabelle mit durchschnittlichen Strukturen aller Beispiele**

| **Beispiel** | **Siloxan** | **Anzahl OH-Gruppen** | **R** |
|---|---|---|---|
| | | | **RK** |
| | | | |
| **Beispiel 1** | MD^{H}₁M | 3,5 | Allylpolyether 1 |
| | | | **-** |
| **Beispiel 2** | MD^{H}₁M | 5,2 | Allylpolyether 2 |
| | | | **-** |
| **Beispiel 3** | MD^{H}₁M | 6,4 | Allylpolyether 3 |
| | | | **-** |
| **Beispiel 4** | MD^{H}₁M | 5 | Allylpolyether 4 |
| | | | **-** |
| **Beispiel 5** | MD^{H}₁M | 2 | Allylpolyether 6 |
| | | | **-** |
| | | | |
| **Beispiel 6** | MD^{H}₁D₁M | 3,5 | Allylpolyether 1 |
| | | | **-** |
| **Beispiel 7** | MD^{H}₁D₁M | 6,4 | Allylpolyether 3 |
| | | | **-** |
| **Beispiel 8** | MD^{H}₁D₁M | 5 | Allylpolyether 4 |
| | | | **-** |
| **Beispiel 20** | MD^{H}₁D₁M | 5 | Allylpolyether 8 |
| | | | |
| **Beispiel 9** | MD^{H}₂DM | 3,5 | Allylpolyether 1 |
| | | | **-** |
| **Beispiel 10** | MD^{H}₂DM | 5,2 | Allylpolyether 2 |
| | | | **-** |
| **Beispiel 11** | MD^{H}₂DM | 6,4 | Allylpolyether 3 |
| | | | **-** |
| **Beispiel 12** | MD^{H}₂DM | 5 | Allylpolyether 4 |
| | | | **-** |
| **Beispiel 13** | MD^{H}₂DM | 7 | Allylpolyether 5 |
| | | | **-** |
| **Beispiel 14** | MD^{H}₂D₂M | 3,5 | Allylpolyether 1 |
| | | | - |
| **Beispiel 15** | MD^{H}₄D₂M | 5,2 | Allylpolyether 2 |
| | | | - |
| | | | |
| **Beispiel 16** | MD^{H}_{1,5}D₅M | 4 | Allylpolyether 7 |
| | | | - |
| **Beispiel 17** | MD^{H}₂D₁M | 5,2 | Allylpolyether 2 |
| | | | Alpha-olefine C8 |
| **Beispiel 18** | MD^{H}₂D₁M | 6 | Allylpolyether 4 |
| | | | Allylpolyether RK₁ |
| **Beispiel 19** | MD^{H}₂D₁M | 4,5 | Allylpolyether 1 |
| | | | Allylpolyether RK₂ |

### Legende:

Für die oben angegebenen Methyl-Wasserstoff-Siloxane bestimmen sich die Bedeutungen der angeführten Abkürzungen wie folgt:
- M: = -O_{0,5}Si(CH₃)₃
- M^{H}: = -O_{0,5}SiH(CH₃)₂
- D: = -O_{0,5}Si(CH₃)₂O_{0,5}-
- D^{H}: = -O_{0,5}SiH(CH₃)O_{0,5}-

Weiterhin verwendete Abkürzungen:
Allylpolyether 1 =
   Ethylenglycolmonoaltylether mit durchschnittlich 2,5 Mol Glycidol
   OH-Zahl = 687 mg KOH/g
   lodzahl = 86,8 g I₂/100g
Allylpolyether 2 =
   Ethylenglycolmonoallylether mit durchschnittlich 4,2 Mol Glycidol
   OH-Zahl = 713 mg KOH/g
   lodzahl = 61,7 g I₂/100g
Allylpolyether 3 =
   Ethylenglycolmonoallylether mit durchschnittlich 5,4 Mol Glycidol
   OH-Zahl =727 mg KOH/g
   lodzahl = 51,5 g I₂/100g
Allylpolyether 4 =
   Allylalkohol mit durchschnittlich 4 Mol Glycidol
   OH-Zahl = 777,1 mg KOH/g
   lodzahl = 68,3 g I₂/100g
Allylpolyether 5 =
   Allylalkohol mit durchschnittlich 6 Mol Glycidol
   OH-Zahl = 767 mg KOH/g
   lodzahl = 48,3 g I₂/100g
Allylpolyether 6 =
   Ethylenglycolmonoallylether mit ethoxyliertem Trimethylolpropanoxetan mit durchschnittlich 3,3 mol EO.
   OH-Zahl = 308 mg KOH/g
   Iodzahl = 61,9 g I₂/100g
Allylpolyether 7 =
   Trimethylolpropanmonoallylether mit 2 mol Trimethylolpropanoxetan und nachfolgender Addition von MPEG350 MonoTDI-Addukt.
   OH-Zahl =158,4 mg KOH/g
   lodzahl = 35,3 g I₂/100g
Allylpolyether 8 =
   Allylalkohol mit durchschnittlich 4 Mol Glycidol ethoxyliert mit 5 Mol EO
   (1 Mol EO pro OH -Gruppe)
   OH-Zahl = 522 mg KOH/g
   lodzahl = 45 g I₂/100g
Allylpolyether RK₁ =
   Unverzweigter Allylpolyether, Allylalkohol-gestarteter Ethylenoxid- Polyether
   Molekulargewicht ca. 225 g/mol
   OH-Zahl = 250 mg KOH/g
   Iodzahl = 113 g I/100 g
Allylpolyether RK₂ =
   Unverzweigter Allylpolyether, Allylalkohol-gestarteter Propylennoxid- Polyether
   Molekulargewicht ca. 240 g/mol
   OH-Zahl = 235 mg KOH/g
   lodzahl = 106,0 g I₂/100g
Alpha-olefine C8 = 1-Octen, Molekulargewicht 112,21 g/mol
   lodzahl = 226 g I/100 g
Speiers's Katalyst = H₂[PtCl₆], 6 H₂O
Dowanol PM = 1-Methoxy-2-propanol
TOP33 = ethoxyliertes Trimethyloloxetan, Perstrop Specialty Chemicals, SE-Perstorp
BHT = 2,6-Di-tert-butyl-p-kresol
DBTL = Dibutylzunndilaurat
MPEG350 = Methanol-gestartetes Polyethylenglykol mit einem durchschnittlichen Molekulargewicht von 350 (Ineos Oxide)
TDI = Toluoldiisocyanat

### III). Einarbeitung der Additive und Bestimmung des Kontaktwinkel mit Wasser

Zur Bewertung der Produkte wurden zu Beginn Polymerblends auf dem Laborwalzwerk (Polymix 110 L, Servitec) mit einem Walzendurchmesser von 110 mm, bei einer Friktion von 1,2 gefertigt; die Friktion ergibt sich aus den unterschiedlichen Umdrehungszahlen der Walzen (vorne 20 UPM / hinten 24 UPM). Die Verarbeitungstemperatur wurde dem jeweiligen, zu prüfenden Thermoplast angepasst (140° bis 190°C), ebenso die Spalteinstellung von 0,7 - 0,9 mm. Zur Herstellung der Polymerblends wurde zuerst je 100 g des zu prüfenden, thermoplastischen Polymer während der ersten 2 Minuten aufgeschmolzen, dann das Additiv zugegeben und anschließend während einer weiteren Mischzeit von 4 - 6 Min (je nach Thermoplast) gewendet. Insgesamt ergibt sich eine Gesamtmischzeit, je nach Polymer von 4-10 Min.

Anschließend werden von den Blends Prüffolien auf einer Laborpresse (Polystat 200 T, Servitec) bei 190°C und 300 bar, während einer Verweilzeit von 30 Sekunden gepresst (Schichtdicke 300- 350 µm). Diese Folien werden über Nacht bei RT konditioniert und anschließend der Kontaktwinkel mit voll entmineralisiertem Wasser bestimmt.

Zur Bewertung der Benetzbarkeit wurden die Kontaktwinkel der additivierten Substrate (Thermoplaste und Formmassen) mittels Kontaktwinkelmessungen mit vollentmineralisertem Wasser bestimmt.

Je höher die polaren Anteile im Substrat sind, desto besser wird das Benetzungsverhalten; d.h. je geringer der Kontaktwinkel mit Wasser, desto effektiver das im Substrat verwendete Additiv.

Eine Reduzierung des Kontaktwinkels mit Wasser auf der Oberfläche indiziert eine Erhöhung der Oberflächenspannung des zu prüfenden Substrates.

Die statischen Kontaktwinkel mit Wasser auf der Oberfläche des additivierten Substrates wurde somit verwendet, um die Hydrophilie der Oberfläche zu charakterisieren.

Die Messungen wurden unter konditionierten Bedingungen (23°C; 65% rel. Luftfeuchte) mit einem Kontaktwinkel-Messgerät der Fa. Krüss (Modell Easy Drop, ausgestattet mit einer Kamera) durchgeführt. Die Kontaktwinkel werden mit einer dazugehörigen Analysensoftware ausgewertet. Es wurden grundsätzlich dreifach Messungen durchgeführt. Die angegebenen Kennwerte sind Mittelwerte, vorhandene Abweichungen werden als +/- dargestellt.

Die nachfolgenden Ergebnisse sind Beispiele für die anwendungstechnische Wirkung der Additive, ohne Einschränkung in der Einsatzbandbreite in den verschiedenen thermoplastischen Polymeren bzw. -Blends, oder polymeren Formmassen.

Die beschriebenen Additive wurden in den unterschiedlichen Konzentrationen (Angaben in Gew-% Gesamtmischung), wie in den folgenden Tabellen beschrieben geprüft.

Der Kontaktwinkel mit Wasser wurde immer jeweils nach 24 Stunden Konditionierung bestimmt.

Die Homogenität der Substrate (Folien) wurde durch Untersuchungen der Ober- und Unterseite der Folie bestimmt. Alle Angaben erfolgen als Mittelwert aus Oben und Unten; Abweichungen werden als +/- erfasst.

Angaben zu den verwendeten Thermoplasten:
**LDPE -** Low Density Polyehtylene; MFI at 230°C/2.16 kg 0,27g/10 min.
   (Riblene FC 40, Polimeri - Europe; characterisation: High molecular LDPE)
**HDPE -** High Density Polyethylene; MFI at 230°C/2,16kg 7 g/10 min. (Eraclene MP 90, Polimeri- Europe; characterisation: HDPE with smal MG-distribution - additivated with antioxidants)
**PPC -** Polypropylene Copolymer; MFI at 230°C/2,16kg 7g/10 min. (PPC 5660, Total - Petrochemicals; characterisation - heterophasic copolymer)
**PPH -** Polypropylene Hompolymer; MFI at 230°C/2,16kg 25g/min. (PPH 9069, Total - Petrochemicals;characterisation - grade for non-wovens fabrics)
**PVC-rigid -** Polyvinylchloride (Solvic 257 RF, Solvay; characerisation: suspension grade, K value= 57)
**ABS -** Acrylonitrile butadiene styrene; MVR at 220°C/10 kg 26 cm³/10 min. (Magnum 8391, DOW Chemicals characerisation - custom grade with medium impact resistance)

### Beispiel LDPE (Tabelle 1)

| **Tabelle 1: LDPE** | | | |
|---|---|---|---|
| Additiv Beispiel | Additiv Konz. In Polymer [%] | Wasser Kontaktwinkel [°] | |
| | | Mittelwert oben/unten | Abweichung oben / unten |
| Control | Ohne Additiv | 87,3 | 2,7 |
| Beispiel 5 | 0,2 | 46,0 | 6,0 |
| Beispiel 6 | 0,2 | 4,2 | 0,5 |
| Beispiel 20 | 0,2 | 3,6 | 1,1 |
| Beispiel 13 | 0,2 | 2,9 | 1,1 |
| Beispiel 14 | 0,2 | 3 | 1 |
| Beispiel 17 | 0,2 | 7 | 1 |
| Beispiel 18 | 0,2 | 3 | 1 |

Aus den Ergebnissen ist zu erkennen, das die Beimischung von, bereits geringen Mengen der erfindungsgemäßen Substanzen (Additiv) in LPDE im Vergleich zum Control (Polymer ohne Additiv) zu einer drastischen Reduzierung des Kontaktwinkels mit Wasser führt (**Tabelle 1**).

### Beispiel PPH (Tabelle 2)

| **Tabelle 2: PPH** | | | |
|---|---|---|---|
| Additiv Beispiel | Additiv Konz. in Polymer [%] | Wasser Kontaktwinkel [°] | |
| | | Mittelwert oben/unten | Abweichung oben / unten |
| Control | Ohne Additiv | 100,8 | 1,9 |
| Konkurrenz muster **IRGASURF® HL 560*** | 2 | 99,4° | 1,4° |
| Beispiel 1 | 2 | 7,0° | 2,5° |
| Beispiel 3 | 2 | 11,7° | 0,2° |
| Beispiel 7 | 2 | 10,1 ° | 1,2° |
| Beispiel 10 | 2 | 5,5° | 1,2° |
| Beispiel 12 | 2 | 4,0° | 0,5° |

| | | | |
|---|---|---|---|
| ***IRGASURF® HL 560,** Ciba Specialty Chemicals | | | |

Aus den Ergebnissen ist zu erkennen, das die Beimischung von bereits geringen Mengen der erfindungsgemäßen Substanzen (Additiv) in PPH im Vergleich zum Control (Polymer ohne Additiv) zu einer drastischen Reduzierung des Kontaktwinkels mit Wasser führt (**Tabelle 2**). Der Zusatz des kommerziell verfügbaren Additives "Irgasurf HL 560 zeigt bei weitem nicht die gleiche Effizienz in der Reduzierung des Kontaktwinkels mit Wasser.

### Beispiel PVC (Tabelle 3)

| **Tabelle 3 : PVC*** | | | |
|---|---|---|---|
| Additiv Beispiel | Additiv Konz. In Polymer | Wasser Kontaktwinkel [°] | |
| | [%] | Mittelwert oben/unten | Abweichung oben / unten |
| Standard | Ohne Additiv | 77,7 | 1,7 |
| Standard + Beispiel 2 | 1,0 | 2,4 | 0,4 |
| Standard + Beispiel 4 | 1,0 | 4,3 | 0,5 |
| Standard + Beispiel 9 | 1,0 | 4,0 | 1,3 |
| Standard + Beispiel 11 | 1.0 | 2,5 | 0,2 |
| Standard + Beispiel 15 | 1,0 | 11,1 | 6,8 |

| | | | |
|---|---|---|---|
| ***PVC** (Standard: 100 Teile PVC l 2.0 Teile BaZn Stabilisator / 0.2 Teile BYK®-P 4100) | | | |

Aus den Ergebnissen ist zu erkennen, daß die Beimischung von bereits geringen Mengen der erfindungsgemäßen Substanzen (Additiv) in PVC im Vergleich zum Standard (stabilisiertes PVC mit Prozessadditiv -ohne Zusatz von weiterem Additiv) zu einer drastischen Reduzierung des Kontaktwinkels mit Wasser führt (**Tabelle 3**).

### Zusätzliche Beispiele:

Der Tabelle 4 sind einige Beispiele für die optimale Dosierung der erfindungsgemäßen Substanz (**Beispiel 8**) zu entnehmen. Genannt wird die Mindest -Einsatzmenge in verschiedenen Polymeren, die nötig ist, um eine vollständige Benetzung (Kontaktwinkel < 10°) zu erreichen.

| **Tabelle 4 : Ubersicht der Einsatzmengen (Beispiel 8) in verschiedenen Polymeren** | | | | | | |
|---|---|---|---|---|---|---|
| Thermoplastic Polymer | Control | Additive | GEW-% Additive in Polymer | GEW-% Additive (30% auf Träger*) in Polymer | Mittelwert oben/unten | Abweichung oben 1 unten |
| LDPE | Control | | | | 92 | ± 4 |
| LDPE | | **Beispiel 8** | | 0,5 | 4 | ± 1 |
| HDPE | Control | | | | 90 | t3 |
| HDPE | | **Beispiel 8** | 1,00 | | 5 | ± 3 |
| PPC | Control | | | | 89 | ± 0 |
| PPC | | **Beispiel 8** | 1,25 | | 5 | ± 0 |
| PPH | Control | | | | 103 | ± 1 |
| PPH | | **Beispiel 8** | 1,50 | | 5 | ± 2 |
| PVC rigid | Control | | | | 67 | ± 1 |
| PVC rigid | | **Beispiel 8** | 0,50 | | 3 | ± |
| ABS | Control | | | | 71 | ± 2 |
| ABS | | **Beispiel 8** | 2,00 | | 5 | ± 1 |

| | | | | | | |
|---|---|---|---|---|---|---|
| *Träger: Accurel® XP 100; Membrana GmbH Accurel Systems | | | | | | |

Durch die Additivierung kann somit das Benetzungsverhalten des Substrates auf wässrige Lackdispersionen, bzw. wässrige Druckfarben eingestellt werden. Da handelsüblich die unterschiedlichsten Lack- und Druckfarbenformulierungen verwendet werden, wurden hier zum eindeutigen Vergleich die Bestimmung des Kontaktwinkels Wasser verwendet.

### IV.) Haftungsprüfung

### Durchführung:

Mit der Schneideseite eines Radiermessers (Künstlerbedarf) -rechtwicklig zum Probenuntergrund gehalten- wird die Beschichtung unter Druck durch Ziehen (seitliches Bewegen, nicht Schneiden) des Messers bis zum Untergrund oder bei Mehrschichtsystemen bis durch die Schicht, die beurteilt werden soll, abgekratzt. Dabei muß die Beschichtung in einer Breite von mehreren Millimetern abgekratzt werden. Bei harten Beschichtungen muß man zuweilen mit beiden Händen auf das Messer drücken. Das Messer darf nicht (durch Schräghalten) schneidend wirken.

### Auswertung

Die Auswertung erfolgte entsprechend der Beurteilung nach DIN 53230 in folgenden Gütestufen:
0= Die Beschichtung haftet sehr gut und zeigt völlig glatte Ränder an den abgekratzten Stellen.
1= Die Beschichtung haftet sehr gut, zeigt jedoch gezackte Ränder
2= Die Beschichtung haftet gut, läßt sich mit der ganzen Auflagefläche des Messers abkratzen;
   glatte Ränder.
3= Die Beschichtung haftet gut, läßt sich mit der ganzen Auflagefläche des Messers abkratzen;
   gezackte Ränder.
4= Schlechter als 3; Abplatzungen
5= Ungenügende Haftung; Abplatzen der Beschichtung

Die Lackhaftung wurde geprüft mit Alberdingk AS 26080 VP, einem System der Fa.Alberdingk Boley GmbH; Applikationsfeld: Hifi-TV, plastic-substrates.
Dieser Lackprimer ist eine Kunststoff-Dispersion (Copolymerisat aus Acrylsäureestern und Styrol).

Es wurde eine Schichtdicke von 120 µm appliziert. Die so beschichteten Folien wurden anschließend 30 min bei 80°C im Ofen getrocknet.
Das Benetzungsverhalten (Silikonstörungen) wurde unmittelbar nach dem Aufziehen beurteilt. Der Haftungstest wurde am folgenden Tag durchgeführt.

| **Additiv Beispiel 8 in PPC [Konz.in %]** | **Kontaktwinkel Wasser** | **Oberflächenbeurteilung Benetzungsverhalten (Silikonstörungen)** | **Haftung / Lack** | |
|---|---|---|---|---|
| 0-Probe | 89° | 1) OK | 1) | 5 |
| | | 2) OK | 2) | 5 |
| 0,50 % | 80° | 1) OK | 1) | 5 |
| | | 2) OK | 2) | 4-5 |
| 1,00 % | 47° | 1) OK | 1) | 4 |
| | | 2) OK | 2) | 4 |
| 1,75 % | 5° | 1) OK | 1) | 3 |
| | | 2) OK | 2) | 3 |

| | | | | |
|---|---|---|---|---|
| Proben 1 und 2) = Doppelbestimmungen | | | | |

Die Haftung einer Druckfarbe wurde mit folgender Druckfarbenrezeptur geprüft:
65 % Joncryl 8052; Acrylatharz, BASF
35% Flexiverse Blau; wässrige Pigmentpaste; SUN-Chemicals, auf Basis von Joncral 8078; Styrol-acrylat - ammonium versalzt

Die Druckfarbe wurde mit einem Spiralrakel in einer Schichtdicke von 12 µm appliziert und anschließend mit einem Fön kurz getrocknet.

Das Benetzungsverhalten (Silikonstörungen) wurde unmittelbar nach dem Aufziehen beurteilt. Die Haftung wurde mit einem Tesafilm sofort und nach 24 h geprüft.

| **Additiv Beispiel 8 in PPH [Konz.in %]** | **Kontaktwinkel Wasser** | **Oberflächenbeurteilung Benetzungsverhalten (Silikonstörungen)** | **Haftung / Druckfarbe** | |
|---|---|---|---|---|
| 0-Probe | 103° | 1) OK | 1) | 4 |
| | | 2) OK | 2) | 4-5 |
| 0,50% | 71° | 1) OK | 1) | 3 |
| | | 2) OK | 2) | 3-4 |
| 0,75% | 62° | 1) OK | 1) | 3 |
| | | 2) OK | 2) | 3 |
| 1,00% | 59° | 1) OK | 1) | 3 |
| | | 2) OK | 2) | 3 |
| 1,25 % | 30 ° | 1) OK | 1) | 2 |
| | | 2) OK | 2) | 2-3 |

| | | | | |
|---|---|---|---|---|
| Proben 1 und 2) = Doppelbestimmungen | | | | |

Sowohl bei der wässrigen Kunststoffdispersion auf PPC, als auch bei der Druckfarbe auf PPH kann beobachtet werden, dass sich durch die Additivierung mit den erfindungsgemäßen Substanzen die Haftung verbessert lässt.

Grundsätzliche Eigenschaften der Polymere, wie z.B. Transparenz, Thermostabilität, rheologisches Fließverhalten, werden durch den Zusatz der Additive in den bestimmungsgemäßen Einsatzmengen nicht nachteilig beeinflußt.

### V.) Antistatische Eigenschaften

Eine Mischung von 100 g Polymer und Additiv in angegebender Dosierungsreihe wurden auf dem Walzwerk gemischt und zu Folien verpresst (Beschreibung, wie zuvor). Die Folien waren homogen und gut herzustellen. Die Folien wurden unter konstanten Bedingungen konditioniert (23°C / 65% rel. Luftfeuchte) und anschließend mit einem Messgerät "Tera-Ohm-Meter 6206", der Fa. Efltex mittels Ring-Elektrode vermessen. Meßspannung: 100 V. Untersucht wurde Beispiel 8 in PPC.

Es wurde der Oberflächenwiderstand nach einem Tag Konditionierung bewertet. Als Oberflächenwiderstand wird der "elektrischer Widerstand" bezeichnet, der ein Material einem Strom entgegensetzt, der auf der Materialoberfläche fließt.

| Proben-Bezeichnung | Additiv Konzentration in Polymer (PPC) [%] | Kontaktwinkel Wasser | Oberflächenwiderstand [Ohm] | |
|---|---|---|---|---|
| | | | Probe Oberseite | Probe Unterseite |
| Control | 0,00 | 89° | 1,6 x 10E13 | 8,7 x 10E12 |
| **Beispiel 8** | 0,50 | 80° | 8,0 x 10E10 | 9,5 x 10E10 |
| **Beispiel 8** | 1,00 | 47° | 2,7 x 10E10 | 4,3 x 10E10 |

An den Beispielen aus der Tabelle ist erkennbar, dass die erfindungsgemäße Substanz eine Reduzierung des Oberflächenwiderstandes hervorruft und somit eine gute antistatische Wirkung anzeigt.

## Patentansprüche

1. Verwendung eines polyether-modifizierten polyhydroxyfunktlonellen Polysiloxans, herstellbar dadurch, dass
(i) zunächst mindestens eine, mindestens eine Wasserstoff-aktive Gruppe aufweisende (meth)allyllsche Startverbindung mit mindestens einem Reagenz, ausgewählt aus der Gruppe bestehend aus Glycldol, Glycoroloarbonat und Hydroxyoxetanen, so umgesetzt wird, dass unter Rilngöffnung mindestens ein (Meth)Allylpolyether gebildet wird, der mindestens einen verzweigten Polyglycidolrest und/oder mindestens einen verzweigten Polyoxetanrest umfasst, und dann
(ii) der oder die erhaltenen (Meth)Allylpolyether In Gegenwart eines säurepuffernden Agens an ein Si-H-funktionelles Alkylpolysiloxan addiert werden, als Additiv in Thermoplasten oder polymeren Formmassen zur Verbesserung der Bedruckbarkeit.

2. Verwendung nach Anspruch 1, **dadurch gekennzeichnet, dass** sich das mindestens eine Polysiloxan durch die allgemeine Formel (I) 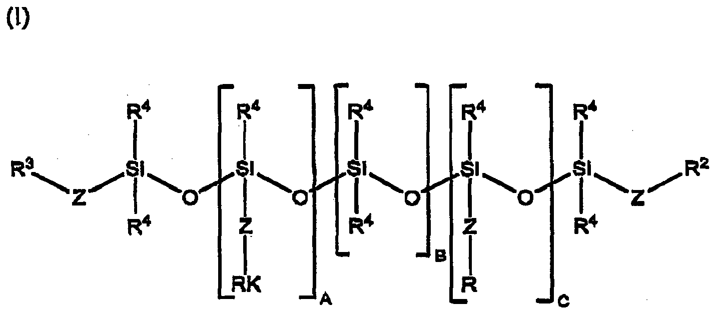 darstellen läßt, wobei
Z = unabhängig voneinander C₁-C₆-Alkylen, wobei an die Reste R oder RK gebundene Substituenten Z unabhängig voneinander für C₃-C₆-Alkylen, bevorzugt Propylen, stehen
Rff = unverzweigter Polyetherrest aus Alkylenoxid-Einheiten und/oder Arylenoxid-Einhelten, und/oder aliphatischer Rest und/oder cycloaliphatischer Rest, und/oder unverzweigter und aliphatischer, cycloallphatischer und/oder aromatischer Polyesterrest
R = Polyhydroxyfunktioneller verzweigter Polyglycidol-Polyetherrest, der aus einer verzweigten Polyglycldolgruppe besteht oder diese enthält, und/oder = polyhydroxyfunktioneller verzweigter Polyoxetane-Polyetherrest, der aus einer verzweigten Polyoxetangruppe besteht oder diese enthält
R² und R³ unabhängig voneinander für
C₁-C₁₄-Alkyl, -Aryl oder -Aralkyl, -O(C₁-C₁₄-Alkyl, -Aryl oder -Aralkyl), -OCO(C₁-C₁₄-Alkyl, -Aryl oder -Aralkyl), -O-CO-O(C₁-C₁₄-Alkyl, -aryl oder -Aralkyl), -H, -OH, -R, -RK, stehen,
R⁴ = C₁-C₁₄-Alkyl, Aryl oder Aralkyl,
A = 0 - 4, bevorzugt 0 -2, besonders bevorzugt 0 oder 1, ganz besonders bevorzugt 0,
B = 0 - 6, bevorzugt 0 - 4, besonders bevorzugt 0, 1 oder 2, ganz besonders bevorzugt 0 oder 1, und
C = 0 - 6, bevorzugt 1 - 4, besonders bevorzugt 1 oder 2 ist;
wobei die Summe aus A + B + C höchstens 7 beträgt, und
wobei für C = 0 gilt, dass R³ = R und/oder R² = R ist.

3. Verwendung nach einem oder mehreren der Ansprüche 1 - 2, **dadurch gekennzeichnet, dass** die (meth)allylische Startverbindung mit Glycldol oder Glycerolcarbonat, bevorzugt mit Glycidol, umgesetzt wird.

4. Verwendung nach einem oder mehreren der Ansprüche 1 - 3, **dadurch gekennzeichnet, dass** es sich bei dem Si-H-funktionellen Alkylpolysiloxan um ein Methylpolysiloxan handelt.

5. Verwendung nach einem oder mehreren der Ansprüche 1 - 4, **dadurch gekennzeichnet, dass** als mindestens eine Wasserstoff-aktive Gruppe aufweisende (meth)allylische Startverbindung mindestens eine mono-hydroxyfunktionelle allylische Startverbindung aus der Gruppe bestehend aus Allylalkohol, Ethylenglycol-monoallylether, Allylpolyethylenglykol, Allylpolypropylenglygol und Allylpolyethylen/polypropylenglyol-Mischpolymerisaten, wobei Ethylanoxid und Propylenoxid In Random-Struktur oder blockwelse angeordnet sein können, eingesetzt wird.

6. Verwendung nach einem oder mehreren der Ansprüche 1-5, **dadurch gekennzeichnet, dass** als mindestens eine Wasserstoff-aktive Gruppe aufweisende (meth)allyllsche Startverbindung mindestens eine allylische Startverbindung mit zwei Hydroxygruppen, bevorzugt Trimethylolpropanmonoallylether oder Glycerinmonoallylether, eingesetzt wird.

7. Verwendung nach einem oder mehreren der Ansprüche 1 - 6, **dadurch gekennzeichnet, dass** der (Meth)Allylpolyether mindestens zwei verzweigende Generationen aufweist.

8. Verwendung nach einem oder mehreren der Ansprüche 1 - 7, **dadurch gekennzeichnet, dass** als Hydroxyoxetan mindestens ein Hydroxyoxetan ausgewählt aus der Gruppe bestehend aus 3-Methyl-3-(hydroxymethyl)oxetan, 3-Ethyl-3-(hydroxymethyl)oxetan und 3,3-Di(hydroxymethyl)oxotan (Trimethylolpropanoxetan), eingesetzt wird.

9. Verwendung nach einem oder mehreren der Ansprüche 1 - 8, **dadurch gekennzeichnet, dass** das polyether-modifizierte polyhydroxyfunktionelle Polysiloxan aus 3 bis 9 Siloxaneinheiten besteht.

10. Verwendung nach einem oder mehreren der Ansprüche 2 - 9, **dadurch gekennzeichnet, dass** der Rest R zu mindestens 50 Mol-%, besonders bevorzugt zu mindestens 70 Mol-% und ganz besonders bevorzugt zu mindestens 90 Mol-°% des Rests R aus Glycidolresten aufgebaut ist.

11. Verwendung nach einem oder mehreren der Ansprüche 1-10, **dadurch gekennzeichnet, dass** die frelen Hydroxygruppen des (Meth)Allylpolyethers alkoxyllert sind.

12. Thermoplast oder polymere Formmasse, enthaltend mindestens ein polyethermodifiziertes polyhydroxyfunktionelles Polysiloxan, das herstellbar ist dadurch, dass
(i) zunächst mindestens eine, mindestens eine Wasserstoff-aktive Gruppe aufweisende (meth)allyllsche Startverbindung mit mindestens einem Reagenz, ausgewählt aus der Gruppe bestehend aus Glycidol, Glycerolcarbonat und Hydroxyoxetanen, so umgesetzt wird, dass unter Ringöffnung mindestens ein (Meth)Allylpolyether gebildet wird, der mindestens einen verzweigten Polyglycidolrest und/oder mindestens einen verzweigten Polyoxetanrest umfasst, und dann
(ii) der oder die erhaltenen (Meth)Allylpolyether in Gegenwart eines säurepuffernden Agens an ein Si-H-funktionelles Alkylpolysiloxan addiert werden, **dadurch gekennzeichnet, dass** sich das mindestens eine Polysiloxan durch die allgemeine Formel (I) 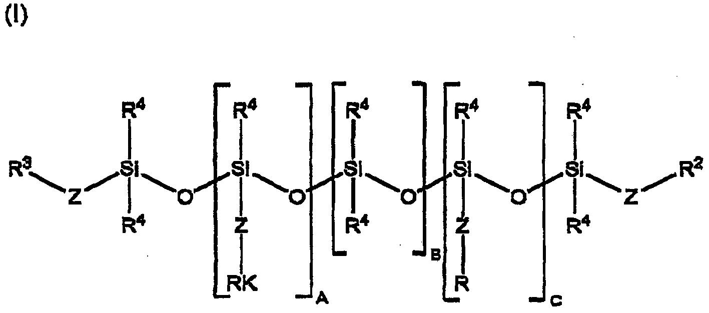 darstellen läßt, wobei
Z = unabhängig voneinander C₁-C₆-Alkylen, wobei an die Reste R oder RK gebundene Substituenten Z unabhängig voneinander für C₃-C₆-Alkylen, bevorzugt Propylen, stehen
RK = unverzwelgter Polyetherrest aus Alkylenoxid-Einheiten und/oder Arylenoxid-Einhelten, und/oder aliphatischer Rest und/oder cycloaliphatischer Rest, und/oder unverzweigter und aliphatischer, cycloaliphatischer und/oder aromatischer Polyesterrest
R = polyhydroxyfunktloneller verzweigter Polyglycidol-Polyetherrest, der aus einer verzweigten Polyglycidolgruppe besteht oder diese enthält, und/oder = polyhydroxyfunktioneller verzweigter Polyoxetane-Polyetherrest, der aus einer verzweigten Polyoxetangruppe besteht oder diese enthält
R² und R³ unabhängig voneinander für
C₁-C₁₄-Alkyl, -Aryl oder -Aralkyl, -O(C₁-C₁₄-Alkyl, -Aryl oder -Aralkyl), -OCO(C₁-C₁₄-Alkyl, -Aryl oder -Aralkyl), -O-CO-O(C₁-C₁₄-Alkyl, -Aryl oder -Aralkyl), -H, -OH, -R, -RK, stehen,
R⁴ = C₁-C₁₄-Alkyl, -Aryl oder Aralkyl,
A = 0 - 4, bevorzugt 0 -2, besonders bevorzugt 0 oder 1, ganz besonders bevorzugt 0,
B = 0 - 6, bevorzugt 0 - 4, besonders bevorzugt 0, 1 oder 2, ganz besonders bevorzugt 0 oder 1, und
C = 0 - 6, bevorzugt 1 - 4, besonders bevorzugt 1 oder 2 ist;
wobei die Summe aus A + B + C höchstens 7 beträgt, und
wobei für C = 0 glit, dass R³ = R und/oder R² = R ist.

13. Thermoplast oder polymere Formmasse nach Anspruch 12, **dadurch gekennzeichnet, dass** das mindestens eine Polysiloxan in einem Anteil von 0,1 - 10 Gew.%, bezogen auf den resultierenden Thermoplasten bzw. die resultierende Formmasse, enthalten Ist.

14. Verfahren zur Erhöhung der Oberflächenenergie von Thermoplasten oder polymeren Formmassen, **dadurch gekennzeichnet, dass** dem Thermoplast oder der polymeren Formmasse vor der Polymerisation 0,1 - 10 Gew.%, bezogen auf den resultierenden Thermoplasten bzw. die resultierende Formmasse, mindestens eines polyether-modifizierten polyhydroxyfunktionellen Polysiloxans zugesetzt werden, das herstellbar ist dadurch, dass
(i) zunächst mindestens eine, mindestens eine Wasserstoff-aktive Gruppe aufweisende (meth)allylische Startverbindung mit mindestens einem Reagenz, ausgewählt aus der Gruppe bestehend aus Glycidol, Glycerolcarbonat und Hydroxyoxetanen, so umgesetzt wird, dass unter Ringöffnung mindestens ein (Meth)Allylpolyether gebildet wird, der mindestens einen verzweigten Polyglycidolrest und/oder mindestens einen verzweigten Polyoxetanrest umfasst, und dann
(ii) der oder die erhaltenen (Meth)Allylpolyether in Gegenwart eines säurepuffernden Agens an ein Si-H-funktionelles Alkylpolysiloxan addiert werden.

15. Polyether-modifiziertes polyhydroxyfunktionelles Polysiloxan, **dadurch gekennzeichnet, dass** es sich durch die allgemeine Formel (I) 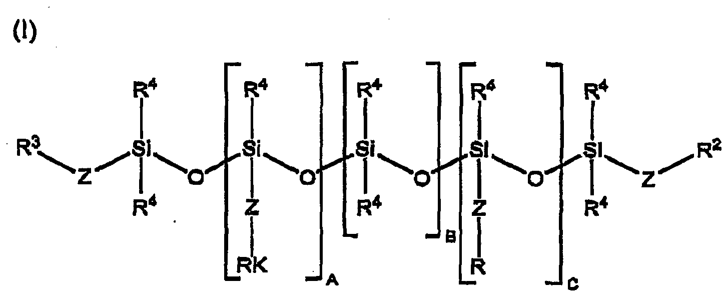 darstellen läßt, wobei
Z = unabhängig voneinander C₁-C₆-Alkylen, wobei an die Reste R oder RK gebundene Substituenten Z unabhängig voneinander für C₃-C₆-Alkylen, bevorzugt Propylen, stehen
RK = unverzweigter Polyetherrest aus Alkylenoxid-Einheiten und/oder Arylenoxid-Einheiten, und/oder aliphatischer Rest und/oder cycloaliphatischer Rest, und/oder unverzweigter und aliphatischer, cycloaliphatischer und/oder aromatischer Polyesterrest
R = polyhydroxyfunktioneller verzweigter Polyglycidol-Polyetherrest, der aus einer verzweigten Polyglycidolgruppe besteht oder diese enthält, und/oder = polyhydroxyfunktioneller verzweigter Polyoxetane-Polyetherrest, der aus einer verzweigten Polyoxotangruppe besteht oder diese enthält
R² und R³ unabhängig voneinander für
C₁-C₁₄-Alkyl, -Aryl oder -Aralkyl, -O(C₁-C₁₄-Alkyl, -Aryl oder -Aralkyl), -OCO(C₁-C₁₄-Alkyl, -Aryl oder -Aralkyl), -O-CO-O(C₁-C₁₄-Alkyl, -Aryl oder -Aralkyl), -H, -OH, -R, -RK, stehen,
R⁴ = C₁-C₁₄-Alkyl, -Aryl oder -Aralkyl,
A = 0 - 4, bevorzugt 0 -2, besonders bevorzugt 0 oder 1, ganz besonders bevorzugt 0,
B = 0 - 6, bevorzugt 0 - 4, besonders bevorzugt 0, 1 oder 2, ganz besonders bevorzugt 0 oder 1, und
C = 0 - 6, bevorzugt 1 - 4, besonders bevorzugt 1 oder 2 ist;
wobei die Summe aus A + B + C höchstens 7 beträgt, und
wobei für C = 0 gilt, dass R³ = R und/oder R² = R ist.

## Claims

1. The use of a polyether-modified polyhydroxyfunctional polysiloxane preparable by
i) firstly reacting at least one (meth)allylic starter compound having at least one hydrogen-active group with at least one reagent selected from the group consisting of glycidol, glycerol carbonate and hydroxyoxetanes such that, with ring opening, at least one (meth)allyl polyether is formed which comprises at least one branched polyglycidol radical and/or at least one branched polyoxetane radical, and then
ii) adding the (meth)allyl polyether(s) obtained in the presence of an acid-buffering agent onto an Si-H-functional alkylpolysiloxane,
as additive in thermoplastics or polymeric molding compositions for improving the printability.

2. The use as claimed in claim 1, **characterized in that** the at least one polysiloxane can be represented by the general formula (I) 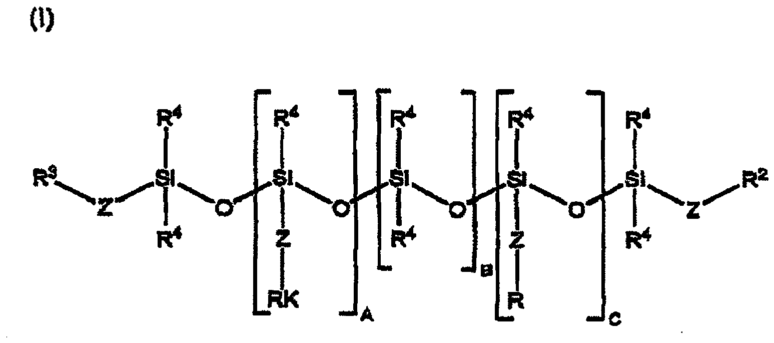 where
Z = independently of one another, C₁-C₆-alkylene, where substituents Z bonded to the radicals R or RK are, independently of one another, C₃-C₆-alkylene, preferably propylene,
RK = unbranched polyether radical of alkylene oxide units and/or arylene oxide units, and/or aliphatic radical and/or cycloaliphatic radical, and/or unbranched and aliphatic, cycloaliphatic and/or aromatic polyester radical
R = polyhydroxyfunctional branched polyglycidol polyether radical which consists of a branched polyglycidol group or comprises this, and/or = polyhydroxyfunctional branched polyoxetane polyether radical which consists of a branched polyoxetane group or comprises this, R² and R³, independently of one another, are C₁-C₁₄-alkyl, -aryl or -aralkyl, -O(C₁-C₁₄-alkyl, -aryl or -aralkyl), -OCO(C₁-C₁₄-alkyl, -aryl or - aralkyl), -O-CO-O (C₁-C₁₄-alkyl, -aryl or - aralkyl), -H, -OH, -R, -RK,
R⁴ =C₁-C₁₄-alkyl, -aryl or -aralkyl,
A = 0-4, preferably 0-2, particularly preferably 0 or 1, very particularly preferably 0,
B = 0-6, preferably 0-4, particularly preferably 0, 1 or 2, very particularly preferably 0 or 1, and
C = 0-6, preferably 1-4, particularly preferably 1 or 2;
where the sum of A + B + C is at most 7, and
where when C = 0, R³ = R and/or R² = R.

3. The use as claimed in one or more of claims 1-2, **characterized in that** the (meth)allylic starter compound is reacted with glycidol or glycerol carbonate, preferably with glycidol.

4. The use as claimed in one or more of claims 1-3, **characterized in that** the Si-H-functional alkylpolysiloxane is a methylpolysiloxane.

5. The use as claimed in one or more of claims 1-4, **characterized in that** at least one mono-hydroxyfunctional allylic starter compound from the group consisting of allyl alcohol, ethylene glycol monoallyl ether, allyl polyethylene glycol, allyl polypropylene glycol and allyl polyethylene/propylene glycol mixed polymers, where ethylene oxide and propylene oxide can be arranged in random structure or blockwise, is used as (meth)allylic starter compound having at least one hydrogen-active group.

6. The use as claimed in one or more of claims 1-5, **characterized in that** at least one allylic starter compound having 2 hydroxy groups, preferably trimethylolpropane monoallyl ether or glycerol monoallyl ether, is used as (meth)allylic starter compound having at least one hydrogen-active group.

7. The use as claimed in one or more of claims 1-6, **characterized in that** the (meth)allyl polyether has at least two branching generations.

8. The use as claimed in one or more of claims 1-7, **characterized in that** at least one hydroxyoxetane selected from the group consisting of 3-methyl-3-(hydroxymethyl)oxetane, 3-ethyl-3-(hydroxy-methyl)oxetane and 3,3-di(hydroxymethyl)oxetane (trimethylolpropane oxetane), is used as hydroxyoxetane.

9. The use as claimed in one or more of claims 1-8, **characterized in that** the polyether-modified polyhydroxyfunctional polysiloxane consists of 3 to 9 siloxane units.

10. The use as claimed in one or more of claims 2-9, **characterized in that** the radical R is composed to at least 50 mol%, particularly preferably to at least 70 mol% and very particularly preferably to at least 90 mol% of the radical R, of glycidol radicals.

11. The use as claimed in one or more of claims 1-10, **characterized in that** the free hydroxy groups of the (meth)allyl polyether are alkoxylated.

12. A thermoplastic or polymeric molding composition comprising at least one polyether-modified polyhydroxyfunctional polysiloxane preparable by
i) firstly reacting at least one (meth)allylic starter compound having at least one hydrogen-active group with at least one reagent selected from the group consisting of glycidol, glycerol carbonate and hydroxyoxetanes such that, with ring opening, at least one (meth)allyl polyether is formed which comprises at least one branched polyglycidol radical and/or at least one branched polyoxetane radical, and then
ii) adding the (meth)allyl polyether(s) obtained in the presence of an acid-buffering agent onto an Si-H-functional alkylpolysiloxane, **characterized in that** the at least one polysiloxane can be represented by the general formula (1) 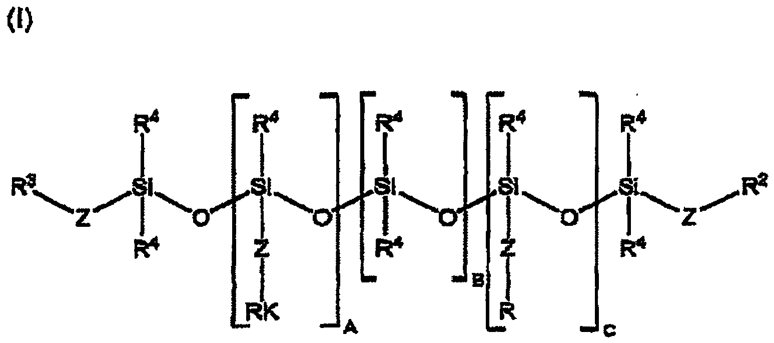 where
Z = independently of one another, C₁-C₆-alkylene, where substituents Z bonded to the radicals R or RK are, independently of one another, C₃-C₆-alkylene, preferably propylene,
RK = unbranched polyether radical of alkylene oxide units and/or arylene oxide units, and/or aliphatic radical and/or cycloaliphatic radical, and/or unbranched and aliphatic, cycloaliphatic and/or aromatic polyester radical
R = polyhydroxyfunctional branched polyglycidol polyether radical which consists of a branched polyglycidol group or comprises this, and/or = polyhydroxyfunctional branched polyoxetane polyether radical which consists of a branched polyoxetane group or comprises this,
R² and R³, independently of one another, are C₁-C₁₄-alkyl, -aryl or -aralkyl, -O(C₁-C₁₄-alkyl, -aryl or -aralkyl), -OCO(C₁-C₁₄-alkyl, - aryl or -aralkyl), -O-CO-O(C₁-C₁₄-alkyl, -aryl or -aralkyl), -H, -OH, -R, -RK,
R⁴ =C₁-C₁₄-alkyl, -aryl or -aralkyl,
A = 0-4, preferably 0-2, particularly preferably 0 or 1, very particularly preferably 0,
B = 0-6, preferably 0-4, particularly preferably 0, 1 or 2, very particularly preferably 0 or 1, and
C = 0-6, preferably 1-4, particularly preferably 1 or 2;
where the sum of A + B + C is at most 7, and
where when C = 0, R³ = R and/or R² = R.

13. The thermoplastic or polymeric molding composition as claimed in claim 12, **characterized in that** the at least one polysiloxane is present in a fraction of 0.1-10% by weight, based on the resulting thermoplastic or the resulting molding composition.

14. A method for increasing the surface energy of thermoplastics or polymeric molding compositions, **characterized in that** prior to the polymerization, 0.1-10% by weight, based on the resulting thermoplastic or the resulting molding composition, of at least one polyether-modified polyhydroxyfunctional polysiloxane preparable by
i) firstly reacting at least one (meth)allylic starter compound having at least one hydrogen-active group with at least one reagent selected from the group consisting of glycidol, glycerol carbonate and hydroxyoxetanes such that, with ring opening, at least one (meth)allyl polyether is formed which comprises at least one branched polyglycidol radical and/or at least one branched polyoxetane radical, and then
ii) adding the (meth)allyl polyether(s) obtained in the presence of an acid-buffering agent onto an Si-H-functional alkylpolysiloxane, are added to the thermoplastic or to the polymeric molding composition.

15. A polyether-modified polyhydroxyfunctional polysiloxane, **characterized in that** it can be represented by the general formula (I) 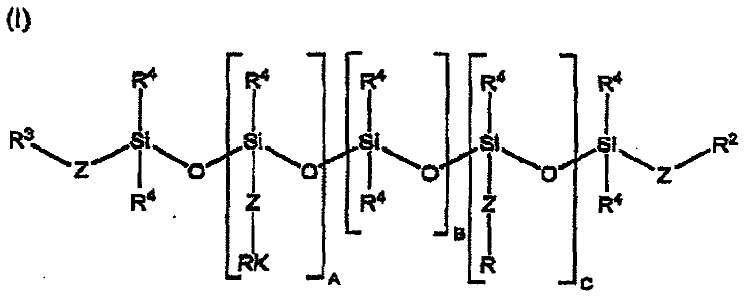 where
Z = independently of one another, C₁-C₆-alkylene, where substituents Z bonded to the radicals R or RK are, independently of one another, C₃-C₆-alkylene, preferably propylene,
RK = unbranched polyether radical of alkylene oxide units and/or arylene oxide units, and/or aliphatic radical and/or cycloaliphatic radical, and/or unbranched and aliphatic, cycloaliphatic and/or aromatic polyester radical
R = polyhydroxyfunctional branched polyglycidol polyether radical which consists of a branched polyglycidol group or comprises this, and/or
= polyhydroxyfunctional branched polyoxetane polyether radical which consists of a branched polyoxetane group or comprises this,
R² and R³, independently of one another, are C₁-C₁₄-alkyl, -aryl or -aralkyl, -O(C₁-C₁₄-alkyl, -aryl or -aralkyl), -OCO (C₁-C₁₄-alkyl, -aryl or -aralkyl), -O-CO-O(C₁-C₁₄-alkyl, -aryl or -aralkyl), -H, -OH, -R, -RK, R⁴ = C₁-C₁₄-alkyl, -aryl or -aralkyl,
A = 0-4, preferably 0-2, particularly preferably 0 or 1, very particularly preferably 0,
B = 0-6, preferably 0-4, particularly preferably 0, 1 or 2, very particularly preferably 0 or 1, and
C = 0-6, preferably 1-4, particularly preferably 1 or 2;
where the sum of A + B + C is at most 7, and
where when C = 0, R³ = R and/or R² = R.

## Revendications

1. Utilisation d'un polysiloxane polyhydroxyfonctionnel à modification polyéther qui peut être fabriqué par les étapes suivantes :
(i) premièrement au moins un composé de départ (méth)allylique contenant au moins un groupe à hydrogène actif est réagi avec au moins un réactif choisi dans le groupe consistant en glycidol, carbonate de glycérol et des hydroxyoxétanes, de telle manière que, dans une réaction de décyclisation, au moins un (méth)allylpolyéther est formé qui contient au moins un groupement polyglycidol ramifié et/ou au moins un groupement polyoxétane ramifié, et puis
(ii) le ou les (méth)allylpolyéther(s) obtenu(s) sont additionnés à un alkylpolysiloxane à fonction Si-H en présence d'un agent à tampon acide, en tant qu'additif dans des matières thermoplastiques ou des masses de moulage polymériques pour améliorer l'imprimabilité.

2. Utilisation selon la revendication 1, **caractérisée en ce que** l'au moins un polysiloxane peut être représenté par la formule générale 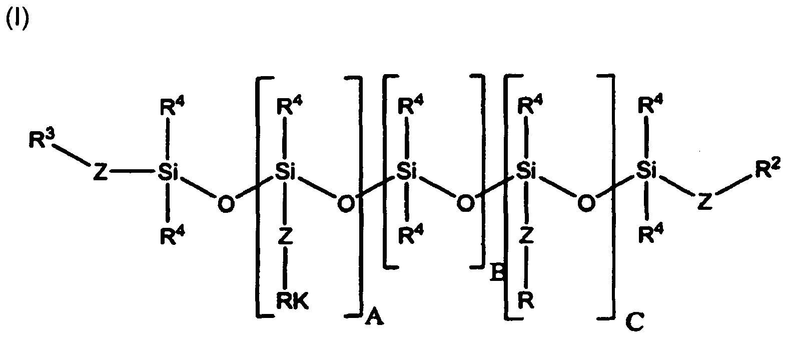 , où
Z = indépendamment l'un de l'autre C₁-C₆-alkylène, où les substituents Z liés à les groupements R ou RK représentent, indépendamment l'un de l'autre, C₃-C₆-alkylène, de préférence propylène,
RK = un groupement polyéther non-ramifié consistant en des unités d'oxyde d'alkylène ou d'oxyde d'arylène, et/ou un groupement aliphatique et/ou un groupement cycloaliphatique, et/ou un groupement polyester non-ramifié et aliphatique, cycloaliphatique et/ou aromatique
R = un groupement polyglycidol-polyéther ramifié polyhydroxyfonctionnel qui contient ou est constitué par un groupe polyglycidol ramifié, et/ou = un groupement polyoxétane-polyéther ramifié polyhydroxyfonctionnel qui contient ou est constitué par un groupe polyoxétane ramifié
R² et R³ représentent, indépendamment l'un de l'autre,
C₁-C₁₄-alkyle, -aryle ou -aralkyle, -O(C₁-C₁₄-alkyle, -aryle ou -aralkyle), - OCO(C₁-C₁₄-alkyle, -aryle ou -aralkyle), -O-CO-O(C₁-C₁₄-alkyle, -aryle ou - aralkyle), -H, -OH, -R, -RK,
R⁴ = C₁-C₁₄-alkyle, -aryle ou -aralkyle,
A = 0 - 4, de préférence 0 - 2, plus préférablement 0 ou 1, de manière particulièrement préférée 0,
B = 0 - 6, de préférence 0 - 4, plus préférablement 0, 1 ou 2, de manière particulièrement préférée 0 ou 1, et
C = 0 - 6, de préférence 1 - 4, plus préférablement 1 ou 2 ;
la somme A + B + C étant au plus 7, et
où, si C = 0, R³ = R et/ou R² = R.

3. Utilisation selon l'une ou plusieurs des revendications 1 et 2,
**caractérisée en ce que** le composé de départ (méth)allylique est réagi avec glycidol ou carbonate de glycérol, de préférence avec glycidol.

4. Utilisation selon l'une ou plusieurs des revendications 1 à 3,
**caractérisée en ce que** l'alkylpolysiloxane à fonction Si-H est un méthylpolysiloxane.

5. Utilisation selon l'une ou plusieurs des revendications 1 à 4,
**caractérisée en ce que**, en tant que composé de départ (méth)allylique comprenant au moins un groupe à hydrogène actif, au moins un composé de départ allylique monohydroxyfonctionnel est utilisé qui est choisi dans le groupe consistant en l'alcool allylique, monoallyléther d'éthylène glycol, allylpolyéthylène glycol, allylpolypropylène glycol et des copolymères allylpolyéthylène/polypropylène glycol, dans lesquels l'oxyde d'éthylène et l'oxyde de propylène peuvent être agencés en structure aléatoire ou en blocs.

6. Utilisation selon l'une ou plusieurs des revendications 1 à 5,
**caractérisée en ce que**, en tant que composé de départ (méth)allylique comprenant au moins un groupe à hydrogène actif, au moins un composé de départ allylique avec deux groupes hydroxy, de préférence monoallyléther de triméthylpropane ou monoallyléther de glycérol, est utilisé.

7. Utilisation selon l'une ou plusieurs des revendications 1 à 6,
**caractérisée en ce que** le (méth)allylpolyéther présente au moins deux générations ramifiantes.

8. Utilisation selon l'une ou plusieurs des revendications 1 à 7,
**caractérisée en ce que** au moins un hydroxyoxétane choisi dans le groupe consistant en 3-méthyl-3-(hydroxyméthyl)oxétane, 3-éthyl-3-(hydroxyméthyl)oxétane et 3,3-di(hydroxyméthyl)oxétane (triméthylolpropanoxétane) est utilisé comme hydroxyoxétane.

9. Utilisation selon l'une ou plusieurs des revendications 1 à 8,
**caractérisée en ce que** le polysiloxane polyhydroxyfonctionnel à modification polyéther consiste en 3 à 9 unités de siloxane.

10. Utilisation selon l'une ou plusieurs des revendications 2 à 9,
**caractérisée en ce qu'**au moins 50 % en moles, plus préférablement au moins 70 % en moles et de manière particulièrement préférée au moins 90 % en mole du groupement R sont constitués de groupements glycidol.

11. Utilisation selon l'une ou plusieurs des revendications 1 à 10,
**caractérisée en ce que** les groupes hydroxy libres du (méth)allylpolyéther sont alkoxylés.

12. Matière thermoplastique ou masse de moulage polymérique, contenant au moins un polysiloxane polyhydroxyfonctionnel à modification polyéther qui peut être fabriqué par les étapes suivantes:
(i) premièrement au moins un composé de départ (méth)allylique contenant au moins un groupe à hydrogène actif est réagi avec au moins un réactif choisi dans le groupe consistant en glycidol, carbonate de glycérol et des hydroxyoxétanes, de telle manière que, dans une réaction de décyclisation, au moins un (méth)allylpolyéther est formé qui contient au moins un groupement polyglycidol ramifié et/ou au moins un groupement polyoxétane ramifié, et puis
(ii) le ou les (méth)allylpolyéther(s) obtenu(s) sont additionnés à un alkylpolysiloxane à fonction Si-H en présence d'un agent à tampon acide, **caractérisée en ce que** l'au moins un polysiloxane peut être représenté par la formule générale (I) 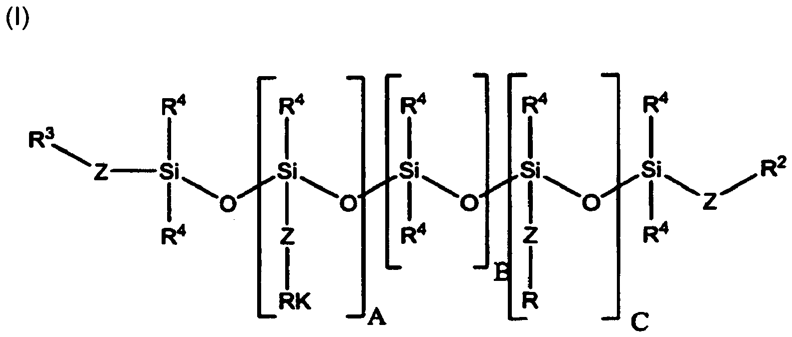
, où
Z = indépendamment l'un de l'autre C₁-C₆-alkylène, où les substituents Z liés à les groupements R ou RK représentent, indépendamment l'un de l'autre, C₃-C₆-alkylène, de préférence propylène,
RK = un groupement polyéther non-ramifié consistant en des unités d'oxyde d'alkylène ou d'oxyde d'arylène, et/ou un groupement aliphatique et/ou un groupement cycloaliphatique, et/ou un groupement polyester non-ramifié et aliphatique, cycloaliphatique et/ou aromatique
R = un groupement polyglycidol-polyéther ramifié polyhydroxyfonctionnel qui contient ou est constitué par un groupe polyglycidol ramifié, et/ou
= un groupement polyoxétane-polyéther ramifié polyhydroxyfonctionnel qui contient ou est constitué par un groupe polyoxétane ramifié
R² et R³ représentent, indépendamment l'un de l'autre,
C₁-C₁₄-alkyle, -aryle ou -aralkyle, -O(C₁-C₁₄-alkyle, -aryle ou -aralkyle), - OCO(C₁-C₁₄-alkyle, -aryle ou -aralkyle), -O-CO-O(C₁-C₁₄-alkyle, -aryle ou - aralkyle), -H, -OH, -R, -RK,
R⁴ = C₁-C₁₄-alkyle, -aryle ou -aralkyle,
A = 0 - 4, de préférence 0 - 2, plus préférablement 0 ou 1, de manière particulièrement préférée 0,
B = 0 - 6, de préférence 0 - 4, plus préférablement 0, 1 ou 2, de manière particulièrement préférée 0 ou 1, et
C = 0 - 6, de préférence 1 - 4, plus préférablement 1 ou 2 ;
la somme A + B + C étant au plus 7, et
où, si C = 0, R³ = R et/ou R² = R.

13. Matière thermoplastique ou masse de moulage polymérique selon la revendication 12, **caractérisée en ce que** l'au moins un polysiloxane est présent dans une proportion de 0,1 à 10 % en poids, par rapport à la matière thermoplastique ou masse de moulage résultante.

14. Procédé pour augmenter l'énergie de surface des matières thermoplastiques ou des masses de moulage polymériques, **caractérisé en ce que** 0,1 à 10 % en poids, par rapport à la matière thermoplastique ou masse de moulage résultante, d'au moins un polysiloxane polyhydroxyfonctionnel à modification polyéther sont ajoutés à la matière thermoplastique ou la masse de moulage polymérique, le polysiloxane pouvant être fabriqué par les étapes suivantes :
(i) premièrement au moins un composé de départ (méth)allylique contenant au moins un groupe à hydrogène actif est réagi avec au moins un réactif choisi dans le groupe consistant en glycidol, carbonate de glycérol et des hydroxyoxétanes, de telle manière que, dans une réaction de décyclisation, au moins un (méth)allylpolyéther est formé qui contient au moins un groupement polyglycidol ramifié et/ou au moins un groupement polyoxétane ramifié, et puis
(ii) le ou les (méth)allylpolyéther(s) obtenu(s) sont additionnés à un alkylpolysiloxane à fonction Si-H en présence d'un agent à tampon acide.

15. Polysiloxane polyhydroxyfonctionnel à modification polyéther, **caractérisé en ce qu'**il peut être représenté par la formule générale (I) 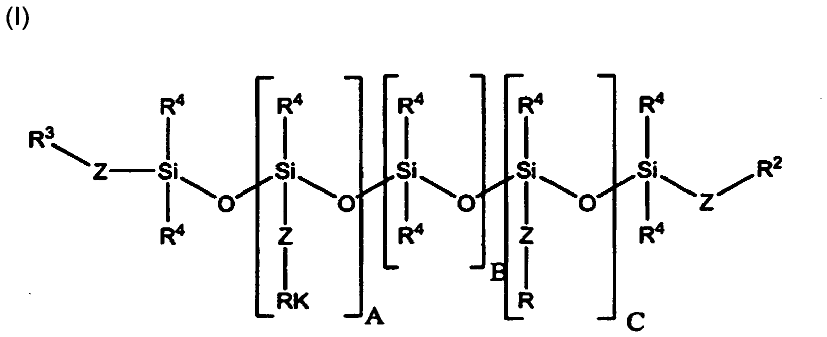 , où
Z = indépendamment l'un de l'autre C₁-C₆-alkylène, où les substituents Z liés à les groupements R ou RK représentent, indépendamment l'un de l'autre, C₃-C₆-alkylène, de préférence propylène,
RK = un groupement polyéther non-ramifié consistant en des unités d'oxyde d'alkylène ou d'oxyde d'arylène, et/ou un groupement aliphatique et/ou un groupement cycloaliphatique, et/ou un groupement polyester non-ramifié et aliphatique, cycloaliphatique et/ou aromatique
R = un groupement polyglycidol-polyéther ramifié polyhydroxyfonctionnel qui contient ou est constitué par un groupe polyglycidol ramifié, et/ou = un groupement polyoxétane-polyéther ramifié polyhydroxyfonctionnel qui contient ou est constitué par un groupe polyoxétane ramifié
R² et R³ représentent, indépendamment l'un de l'autre,
C₁-C₁₄-alkyle, -aryle ou -aralkyle, -O(C₁-C₁₄-alkyle, -aryle ou -aralkyle), - OCO(C₁-C₁₄-alkyle, -aryle ou -aralkyle), -O-CO-O(C₁-C₁₄-alkyle, -aryle ou - aralkyle), -H, -OH, -R, -RK,
R⁴ = C₁-C₁₄-alkyle, -aryle ou -aralkyle,
A = 0 - 4, de préférence 0 - 2, plus préférablement 0 ou 1, de manière particulièrement préférée 0,
B = 0 - 6, de préférence 0 - 4, plus préférablement 0, 1 ou 2, de manière particulièrement préférée 0 ou 1, et
C = 0 - 6, de préférence 1 - 4, plus préférablement 1 ou 2 ;
la somme A + B + C étant au plus 7, et
où, si C = 0, R³ = R et/ou R² = R.
